# EUROPEAN PATENT APPLICATION

(11) **EP 4 503 473 A1**
(43) Date of publication of application: **05.02.2025**
(21) Application number: 23795099.3
(22) Date of filing: 18.04.2023
(51) Int. Cl.: H04B 7/185

(54) **SATELLITE COMMUNICATION METHOD AND DEVICE**

(30) Priority: 24.04.2022 CN 202210435692
(71) Applicant: Huawei Technologies Co., Ltd., Shenzhen, Guangdong 518129 (CN)
(72) Inventor: CHEN, Ying, Shenzhen, Guangdong 518129 (CN); ZHANG, Peng, Shenzhen, Guangdong 518129 (CN); SONG, Xinghua, Shenzhen, Guangdong 518129 (CN); WANG, Jun, Shenzhen, Guangdong 518129 (CN)
(74) Representative: Huawei European IPR
(86) International application number: PCT/CN2023/088883
(87) International publication number: WO 2023/207666

(57) **Abstract**

A satellite communication method and an apparatus are provided, and the method may be applied to a communication apparatus supporting a satellite frequency band, a communication apparatus supporting the satellite frequency band and a terrestrial frequency band, or the like. The method includes: A first communication apparatus obtains a first signal threshold, and detects a signal strength of a second frequency band, where the second frequency band is used by a second communication apparatus (for example, a communication apparatus in a terrestrial cell) to receive a signal; and when the signal strength of the second frequency band is less than or equal to the first signal threshold, determines to send a signal on a first frequency band. According to the method, satellite communication and terrestrial communication can be better compatible with each other, and interference from the satellite communication to the terrestrial communication is maximally avoided.

## Description

This application claims priority to Chinese Patent Application No. 202210435692.7, filed with the China National Intellectual Property Administration on April 24, 2022 and entitled "SATELLITE COMMUNICATION METHOD AND APPARATUS", which is incorporated herein by reference in its entirety.

### TECHNICAL FIELD

This application relates to the field of communication technologies, and in particular, to a satellite communication method and an apparatus.

### BACKGROUND

Compared with terrestrial communication, satellite communication has unique advantages. For example, the satellite communication can provide wider coverage, and a satellite is not vulnerable to a natural disaster or an external force. If the satellite communication is introduced to future communication, communication services can be provided for some areas that cannot be covered by terrestrial communication networks such as oceans and forests. This can effectively enhance communication reliability, for example, ensuring better communication services for airplanes, trains, and users on these transportation vehicles; and provide more data transmission resources for the communication, and improve a network rate. Therefore, supporting both the terrestrial communication and the satellite communication is an inevitable trend of the future communication, and is greatly beneficial in terms of wide coverage, reliability, multi-connection, a high throughput, and the like.

Currently, the satellite communication has been introduced into a 3rd generation partnership (3rd generation partnership project, 3GPP) standard, and is used as a communication scenario of 5th generation (5th generation, 5G) communication or the future communication. In addition, in the standard, to adapt to features of a long latency and high mobility, timing, synchronization, hybrid automatic repeat request (hybrid automatic repeat request, HARQ), and other technologies are enhanced.

However, how the satellite communication is better compatible with the terrestrial communication needs to be resolved urgently.

### SUMMARY

This application provides a satellite communication method and an apparatus, so that satellite communication can be better compatible with terrestrial communication, and interference from the satellite communication to the terrestrial communication is maximally avoided.

According to a first aspect, an embodiment of this application provides a satellite communication method. The method includes: A first communication apparatus obtains a first signal threshold; detects a signal strength of a second frequency band, where the second frequency band is used by a second communication apparatus to receive a signal; and when the signal strength of the second frequency band is less than or equal to the first signal threshold, determines to send a signal on a first frequency band.

In this embodiment of this application, in a communication scenario in which a satellite cell and a terrestrial cell coexist, when there is a frequency band in a same frequency band of the satellite cell or adj acent to the frequency band of the satellite cell, the satellite cell and the terrestrial cell may directly interfere with each other. Consequently, communication of the terrestrial cell is affected. In this way, the first communication apparatus may first detect a signal strength of a frequency band of the terrestrial cell, and then send an uplink signal on the frequency band of the satellite cell when the signal strength of the frequency band of the terrestrial cell is less than or equal to the first signal threshold. Therefore, interference to the terrestrial cell caused when the first communication apparatus directly sends the uplink signal is avoided, and receiving performance of the second communication apparatus is maximally ensured.

In a possible implementation, a frequency spacing between the first frequency band and the second frequency band is less than or equal to a spacing threshold.

In a possible implementation, when the signal strength of the second frequency band is greater than the first signal threshold, it indicates that if the first communication apparatus sends the signal on the first frequency band, receiving performance of the second communication apparatus is affected.

In a possible implementation, the method further includes: when the signal strength of the second frequency band is greater than the first signal threshold, determining not to send the signal on the first frequency band.

In a possible implementation, the method further includes: The first communication apparatus obtains first configuration information, where the first configuration information includes at least one of a first distance threshold or a location reference point. The determining to send a signal on a first frequency band includes: when a distance between the first communication apparatus and the location reference point is greater than or equal to the first distance threshold, determining to send the signal on the first frequency band.

In a possible implementation, the method further includes: The first communication apparatus obtains second configuration information, where the second configuration information includes at least one of the following information: priorities of at least two frequency bands or thresholds corresponding to frequency bands with different priorities, the at least two frequency bands include the second frequency band, the thresholds include at least one of a signal threshold or a distance threshold, the signal threshold includes the first signal threshold, and the distance threshold includes the first distance threshold.

In a possible implementation, the second frequency band is a frequency band with a highest priority in the at least two frequency bands.

In a possible implementation, a signal threshold corresponding to a frequency band with a smaller frequency spacing from the first frequency band is not greater than a signal threshold corresponding to a frequency band with a larger frequency spacing from the first frequency band.

In a possible implementation, a distance threshold corresponding to the frequency band with the smaller frequency spacing from the first frequency band is not less than a distance threshold corresponding to the frequency band with the larger frequency spacing from the first frequency band.

In a possible implementation, a signal threshold of a frequency band with a low priority is not less than a signal threshold of a frequency band with a high priority.

In a possible implementation, a distance threshold of the frequency band with the low priority is not greater than a signal threshold of the frequency band with the high priority.

In a possible implementation, that the first communication apparatus detects a signal strength of a second frequency band includes: when receiving first indication information from a third communication apparatus, detecting the signal strength of the second frequency band based on the first indication information.

In a possible implementation, the method further includes: when receiving second indication information from the third communication apparatus, determining, based on the second indication information, to send the signal on the first frequency band.

In a possible implementation, after the determining to send a signal on a first frequency band, the method further includes: detecting a signal strength of a third frequency band; and when the signal strength of the third frequency band is greater than or equal to a second signal threshold, initiating a cell handover or cell reselection, or exiting a radio resource control RRC connected state.

In a possible implementation, the first frequency band includes n256; and the second frequency band includes any one or more of the following: n2, n25, n33, n39, and n70.

According to a second aspect, an embodiment of this application provides a satellite communication method. The method includes: A third communication apparatus obtains a first signal threshold. The third communication apparatus sends second configuration information, where the second configuration information includes information about the first signal threshold.

In a possible implementation, the second configuration information includes at least one of the following information: priorities of at least two frequency bands or thresholds corresponding to frequency bands with different priorities, the at least two frequency bands include a second frequency band, the thresholds include at least one of a signal threshold or a distance threshold, the signal threshold includes the first signal threshold, and the distance threshold includes a first distance threshold.

According to a third aspect, an embodiment of this application provides a first communication apparatus, configured to perform the method in any one of the first aspect or the possible implementations of the first aspect. The first communication apparatus includes units configured to perform the method in any one of the first aspect or the possible implementations of the first aspect.

For example, the first communication apparatus may be a terminal device or a chip, and the chip may be used in the terminal device.

According to a fourth aspect, an embodiment of this application provides a third communication apparatus, configured to perform the method in any one of the second aspect or the possible implementations of the second aspect. The third communication apparatus includes units configured to perform the method in any one of the second aspect or the possible implementations of the second aspect.

For example, the third communication apparatus may be a network device or a chip, and the chip may be used in the network device.

According to a fifth aspect, an embodiment of this application provides a first communication apparatus. The first communication apparatus includes a processor, configured to perform the method shown in any one of the first aspect or the possible implementations of the first aspect. Alternatively, the processor is configured to execute a program stored in a memory. When the program is executed, the method shown in any one of the first aspect or the possible implementations of the first aspect is performed.

In a possible implementation, the memory is located outside the first communication apparatus.

In a possible implementation, the memory is located inside the first communication apparatus.

In this embodiment of this application, the processor and the memory may alternatively be integrated into one device. In other words, the processor and the memory may alternatively be integrated together.

In a possible implementation, the first communication apparatus further includes a transceiver, and the transceiver is configured to: receive a signal or send a signal. For example, the transceiver may be further configured to receive at least one of first configuration information or second configuration information. For example, the transceiver may be further configured to send an uplink signal and the like.

In this embodiment of this application, the first communication apparatus may be a terminal device, a chip in the terminal device, or the like.

According to a sixth aspect, an embodiment of this application provides a third communication apparatus. The third communication apparatus includes a processor, configured to perform the method shown in any one of the second aspect or the possible implementations of the second aspect. Alternatively, the processor is configured to execute a program stored in a memory. When the program is executed, the method shown in any one of the second aspect or the possible implementations of the second aspect is performed.

In a possible implementation, the memory is located outside the third communication apparatus.

In a possible implementation, the memory is located inside the third communication apparatus.

In this embodiment of this application, the processor and the memory may alternatively be integrated into one device. In other words, the processor and the memory may alternatively be integrated together.

In a possible implementation, the third communication apparatus further includes a transceiver, and the transceiver is configured to: receive a signal or send a signal. For example, the transceiver may be configured to send at least one of first configuration information or second configuration information. For example, the transceiver may be further configured to receive an uplink signal and the like.

In this embodiment of this application, the third communication apparatus may be a network device, a chip in the network device, or the like.

According to a seventh aspect, an embodiment of this application provides a first communication apparatus. The first communication apparatus includes a logic circuit and an interface. The logic circuit is coupled to the interface. The logic circuit is configured to obtain a first signal threshold. The logic circuit is further configured to detect a signal strength of a second frequency band. The logic circuit is further configured to: when the signal strength of the second frequency band is less than or equal to the first signal threshold, determine to send a signal on a first frequency band.

Optionally, the interface is configured to output an uplink signal.

Optionally, the interface is further configured to input at least one of first configuration information or second configuration information.

It may be understood that the foregoing steps of obtaining the first signal threshold, detecting the signal strength of the second frequency band, and the like may be performed by the same logic circuit, or may be performed by different logic circuits. In other words, in a specific implementation, based on a requirement, a person skilled in the art may perform the foregoing steps by using a logic circuit, or perform the foregoing steps by using different logic circuits.

According to an eighth aspect, an embodiment of this application provides a third communication apparatus. The third communication apparatus includes a logic circuit and an interface. The logic circuit is coupled to the interface; the logic circuit is configured to obtain a first signal threshold; and the interface is configured to output second configuration information.

According to a ninth aspect, an embodiment of this application provides a computer-readable storage medium. The computer-readable storage medium is configured to store a computer program, and when the computer program is run on a computer, the method shown in any one of the first aspect or the possible implementations of the first aspect is performed.

According to a tenth aspect, an embodiment of this application provides a computer-readable storage medium. The computer-readable storage medium is configured to store a computer program, and when the computer program is run on a computer, the method shown in any one of the second aspect or the possible implementations of the second aspect is performed.

According to an eleventh aspect, an embodiment of this application provides a computer program product. The computer program product includes a computer program or computer code, and when the computer program or the computer code is run on a computer, the method shown in any one of the first aspect or the possible implementations of the first aspect is performed.

According to a twelfth aspect, an embodiment of this application provides a computer program product. The computer program product includes a computer program or computer code, and when the computer program or the computer code is run on a computer, the method shown in any one of the second aspect or the possible implementations of the second aspect is performed.

According to a thirteenth aspect, an embodiment of this application provides a computer program. When the computer program is run on a computer, the method shown in any one of the first aspect or the possible implementations of the first aspect is performed.

According to a fourteenth aspect, an embodiment of this application provides a computer program. When the computer program is run on a computer, the method shown in any one of the second aspect or the possible implementations of the second aspect is performed.

According to a fifteenth aspect, an embodiment of this application provides a wireless communication system. The wireless communication system includes a terminal device and a network device, the terminal device is configured to perform the method shown in any one of the first aspect or the possible implementations of the first aspect, and the network device is configured to perform the method shown in any one of the second aspect or the possible implementations of the second aspect.

### BRIEF DESCRIPTION OF DRAWINGS

FIG. 1 is a diagram of a communication system according to an embodiment of this application;
FIG. 2a is a diagram of a satellite communication system in a transparent transmission scenario according to an embodiment of this application;
FIG. 2b is a diagram of a satellite communication system in a regeneration scenario according to an embodiment of this application;
FIG. 2c is a diagram of a satellite communication system in a regeneration scenario according to an embodiment of this application;
FIG. 3 is a diagram of frequency bands according to an embodiment of this application;
FIG. 4 is a schematic flowchart of a satellite communication method according to an embodiment of this application;
FIG. 5a is a schematic flowchart of a satellite communication method according to an embodiment of this application;
FIG. 5b is a diagram of area division according to an embodiment of this application;
FIG. 6 is a diagram of a structure of a communication apparatus according to an embodiment of this application;
FIG. 7 is a diagram of a structure of a communication apparatus according to an embodiment of this application; and
FIG. 8 is a diagram of a structure of a communication apparatus according to an embodiment of this application.

### DESCRIPTION OF EMBODIMENTS

To make objectives, technical solutions, and advantages of this application clearer, this application is further described below with reference to the accompanying drawings.

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned in this specification mean that specific features, structures, or characteristics described with reference to the embodiments may be included in at least one embodiment of this application. The phrase appearing in various locations in this specification may not necessarily refer to a same embodiment, and is not an independent or alternative embodiment exclusive from another embodiment. It may be understood explicitly and implicitly by a person skilled in the art that the embodiments described herein may be combined with other embodiments.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate: only A exists, only B exists, and both A and B exist. A and B may be singular or plural. A character "/" usually indicates an "or" relationship between the associated objects. "At least one of the following" or a similar expression thereof means any combination of these items. For example, at least one of a, b, or c may represent: a, b, c, "a and b", "a and c", "b and c", or "a, b and c".

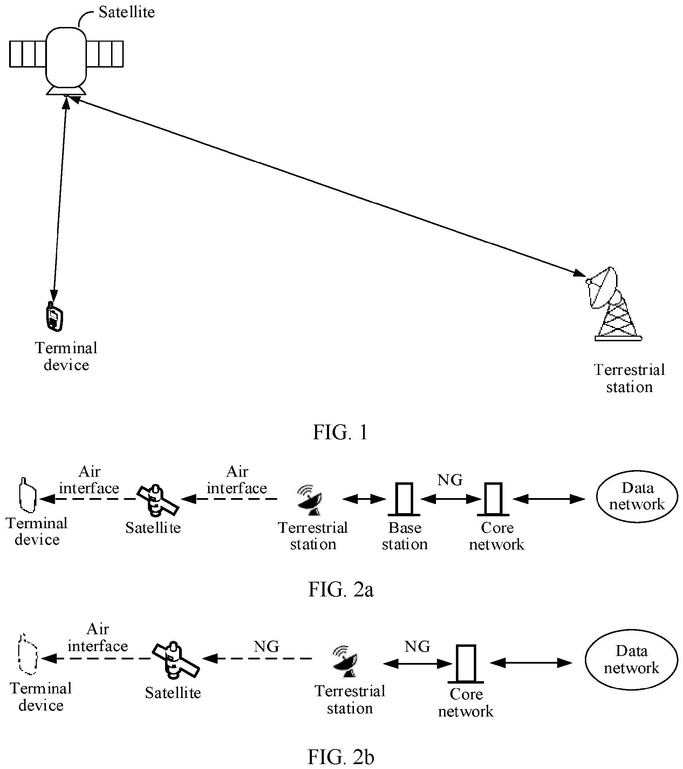

The methods provided in this application may be applied to a non-terrestrial network (non-terrestrial network, NTN) communication system. As shown in FIG. 1, the communication system may include a terminal device, a satellite (which may also be referred to as a satellite base station), and a terrestrial station (which may also be referred to as a gateway station or a signal gateway station) (gateway). It may be understood that FIG. 1 shows only one satellite and one terrestrial station. In actual use, an architecture with a plurality of satellites and/or a plurality of terrestrial stations may be used as required. Each satellite may serve one or more terminal devices, each satellite may correspond to one or more terrestrial stations, and each terrestrial station may correspond to one or more satellites. This is not specifically limited in this application.

The terminal device in this application is an apparatus that has a wireless transceiver function. The terminal device may communicate with an access network device (or may also be referred to as an access device) in a radio access network (radio access network, RAN). The terminal device may also be referred to as user equipment (user equipment, UE), an access terminal, a terminal (terminal), a subscriber unit (subscriber unit), a subscriber station, a mobile station, a remote station, a remote terminal, a mobile device, a user terminal, a user agent, a user apparatus, or the like. In a possible implementation, the terminal device may be deployed on land, including an indoor device, an outdoor device, a handheld device, or a vehicle-mounted device, or may be deployed on a water surface (for example, on a ship). In a possible implementation, the terminal device may be a handheld device, a vehicle-mounted device, a wearable device, a sensor, a terminal in the internet of things, a terminal in the internet of vehicles, an uncrewed aerial vehicle, a terminal device in any form in a 5th generation (5th generation, 5G) network and a future network, or the like that has a wireless communication function. This is not limited in this application.

It may be understood that terminal devices shown in this application may further communicate with each other by using device-to-device (device-to-device, D2D) communication, machine-to-machine (machine-to-machine, M2M) communication, or the like. The terminal device shown in this application may alternatively be a device in the internet of things (internet of things, IoT). This IoT network may include, for example, the internet of vehicles. Communication manners in an internet of vehicles system are collectively referred to as vehicle-to-X (vehicle-to-X, V2X, where X may represent everything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, or vehicle-to-network (vehicle-to-network, V2N) communication.

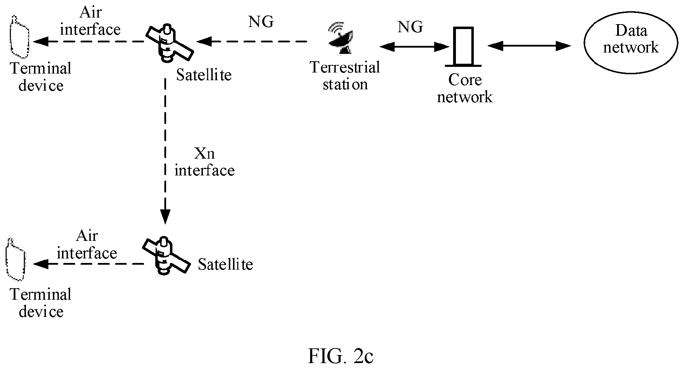

The terrestrial station in this application may be configured to: connect the satellite to a base station, or connect the satellite to a core network. The satellite in this application may provide a radio access service for the terminal device, schedule a radio resource to an accessed terminal device, and provide a reliable radio transmission protocol, data encryption protocol, and the like. The satellite may use an artificial earth satellite, a high-altitude aircraft, and the like as base stations for wireless communication, for example, an evolved NodeB (evolved NodeB, eNB) and a next generation NodeB (next generation NodeB, gNB). Alternatively, the satellite may alternatively serve as a relay of these base stations, and transparently transmit signals of these base stations to the terminal device. Therefore, in some implementations of this application, for example, in a transparent transmission scenario of the satellite, a network device may be the base station (also referred to as a terrestrial base station) shown in FIG. 1. FIG. 2a is a diagram of a satellite communication system in a transparent transmission scenario according to an embodiment of this application. For example, a terminal device may access a network through air interfaces (where the air interfaces may be various types of air interfaces, for example, 5G air interfaces), and a network device may be deployed on a terrestrial base station. A satellite is connected to a terrestrial station over a radio link. The terrestrial station and the terrestrial base station are connected to a core network in a wired or wireless manner. There may be a radio link between satellites. In the system shown in FIG. 2a, the satellites may have a transparent transmission and forwarding function (that is, corresponding network devices are deployed on the ground), and transparent transmission and forwarding may be performed between the satellites. In some other implementations of this application, for example, in a regeneration scenario of the satellites, network devices may be the satellites shown in FIG. 1. FIG. 2b is a diagram of a satellite communication system in a regeneration scenario according to an embodiment of this application. For example, a terminal device may access a network through air interfaces (where the air interfaces may be various types of air interfaces, for example, 5G air interfaces), and network devices may be deployed on satellites (for example, in a regeneration mode of the satellites). For example, base stations or some functions of the base stations are deployed on the satellites, and signaling exchange and user data transmission between the base stations may be completed between the satellites, as shown in FIG. 2c.

For example, network elements and interfaces between the network elements in FIG. 2a to FIG. 2c may be shown as follows.

The terminal device may access a satellite network through an air interface and initiate a service such as a call or internet access. The base station may provide a radio access service, schedule a radio resource to the accessed terminal device, and provide a reliable radio transmission protocol, data encryption protocol, and the like. The terrestrial station may be configured to forward signaling and service data between the satellite and the core network. The core network may be used for user access control, mobility management, session management, user security authentication, charging, or the like. The core network may include a plurality of functional units, for example, function entities including control planes and data planes. For example, the core network shown in FIG. 2a to FIG. 2c may include an access mobility management function (access and mobility management function, AMF), a session management function (session management function, SMF), a user plane function (user plane function, UPF), and the like. For example, the AMF may be responsible for user access management, security authentication, mobility management, and the like. The UPF may be configured to manage user plane data transmission, traffic statistics, and the like. The air interface shown in FIG. 2a to FIG. 2c may be understood as a radio link between the terminal and the base station, or a radio link between the satellite and the terrestrial station. An Xn interface may be understood as an interface between the base stations, and is mainly used for signaling exchange such as a handover. An NG interface may be used as an interface between the base station and the core network, and is used to exchange signaling such as non-access (non-access stratum, NAS) signaling of the core network and service data of a user.

It may be understood that in systems using different radio access technologies, names of devices having functions of the base station may be different, and are not shown one by one in this application.

Optionally, the satellite may be a geostationary earth orbit (geostationary earth orbit, GEO) satellite, a medium earth orbit (medium earth orbit, MEO) satellite or a low earth orbit (low earth orbit, LEO) satellite in a non-geostationary earth orbit (none-geostationary earth orbit, NGEO), a high altitude platform station (High Altitude Platform Station, HAPS), or the like. A specific type of the satellite is not limited in this application.

A network architecture and a service scenario that are described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of new service scenarios, the technical solutions provided in embodiments of this application are also applicable to similar technical problems.

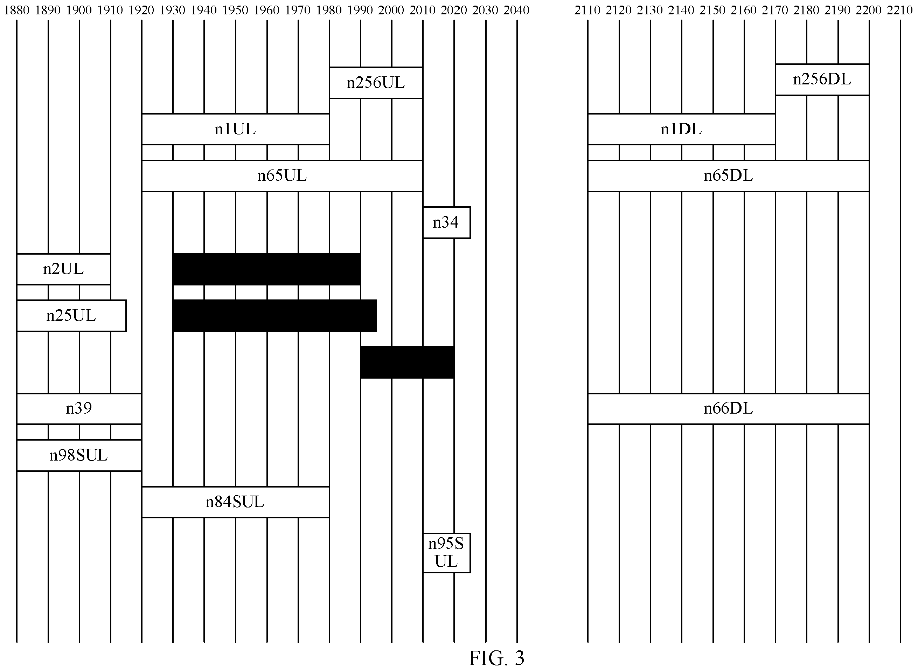

FIG. 3 is a diagram of frequency bands according to an embodiment of this application. A frequency band including an uplink (uplink, UL) shown in FIG. 3 means that the frequency band may be used for an uplink of frequency division duplex (frequency division duplex, FDD), for example, n256UL, n2UL, n65UL, n2UL or n25UL. Details are not listed one by one herein again. A frequency band including a downlink (downlink, DL) shown in FIG. 3 means that the frequency band may be used for a downlink of frequency division duplex (frequency division duplex, FDD), for example, n256DL, n1DL, n2DL, n25DL, n65DL, n66DL, or n70DL. Details are not listed one by one herein again. A frequency band not including the UL and a DL shown in FIG. 3 may be used for time division duplex (time division duplex, TDD), for example, n34 or n39. Details are not listed one by one herein again. A frequency band including a supplementary uplink (supplementary uplink, SUL) shown in FIG. 3 may be used for an uplink, for example, n84SUL or n95 SUL. Details are not listed one by one herein again. It may be understood that FIG. 3 merely shows an example of some frequency bands near a frequency band number n256. With evolution of a standard, frequencies corresponding to the frequency bands may change, or frequency bands used for satellite communication may also change. Therefore, a person skilled in the art may adaptively apply methods shown below in this application based on distribution of different frequency bands.

As shown in FIG. 3, an uplink frequency of n256 includes 1980 MHz to 2010 MHz (n256UL shown in FIG. 3), and a downlink frequency of n256 includes 2170 MHz to 2200 MHz (n256DL shown in FIG. 3). For distribution of frequencies of other frequency bands, refer to FIG. 3. Details are not described one by one herein again. Frequency bands whose frequency band numbers are n255 and n256 are introduced for the satellite communication. An uplink frequency of n255 includes 1626.5 MHz to 1660.5 MHz, and a downlink frequency of n255 includes 1525 MHz to 1559 MHz.

When a terrestrial cell and a satellite cell coexist, and the terrestrial cell and the satellite cell are at a same frequency or adjacent frequencies, a terminal device in the terrestrial cell may be affected by a terminal in the satellite cell. For example, for n2, n25, n70, and other frequency bands, if a terrestrial cell near a satellite cell is located in these frequency bands, interference may be caused when a terminal device in the satellite cell initiates an uplink signal to receiving of a downlink signal by a terminal device in the terrestrial cell.

In view of this, embodiments of this application provide a satellite communication method and an apparatus, so that the satellite communication can be better compatible with terrestrial communication, and impact caused when the terminal device in the satellite cell sends the signal on the terminal device in the terrestrial cell can be considered, thereby maximally avoiding interference from the satellite communication to the terrestrial communication.

It may be understood that, if the terrestrial cell and the satellite cell are at the same frequency or the adjacent frequencies, the uplink signal initiated by the terminal device in the satellite cell affects the downlink signal received by the terminal device in the terrestrial cell. Similarly, interference exists between a downlink signal received by the terminal device in the satellite cell and an uplink signal sent by the terminal device in the terrestrial cell. Because a network device can adjust a power of a downlink signal sent by the network device to reduce the interference, the following uses the uplink signal initiated by the terminal device in the satellite cell and the downlink signal received by the terminal device in the terrestrial cell as an example for description. However, based on the methods shown below, a person skilled in the art may adaptively apply the methods shown below to a scenario in which the terminal device in the satellite cell receives the downlink signal and the terminal device in the terrestrial cell sends the uplink signal.

A first communication apparatus in embodiments of this application may include a terminal device, and the terminal device may be the terminal device in the satellite cell; or a first communication apparatus may include a chip, and the chip may be used in the terminal device in the satellite cell. In addition, a third communication apparatus in embodiments of this application may include a satellite, a terrestrial base station, or the like. For descriptions of the terminal device, the satellite, and the like, refer to FIG. 1, FIG. 2a, and FIG. 2c. Details are not described one by one herein again.

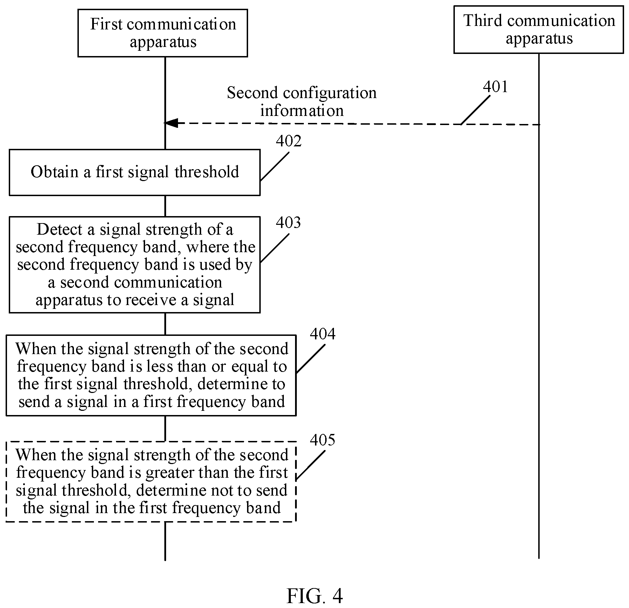

FIG. 4 is a schematic flowchart of a satellite communication method according to an embodiment of this application. As shown in FIG. 4, the method includes the following steps.

402: A first communication apparatus obtains a first signal threshold.

The first signal threshold is a threshold for determining a relationship between signal strengths of two frequency bands (where the two frequency bands include a first frequency band), or the first signal threshold may indicate to determine, based on the first signal threshold, whether to send a signal on the first frequency band.

In a possible implementation, the first signal threshold may be defined in a standard. With reference to step 405, frequency bands with different priorities described below may correspond to different thresholds, and the thresholds corresponding to the frequency bands with the different priorities shown below may also be defined in the standard. The first signal threshold is set in the first communication apparatus in a preset manner, so that a workload of the first communication apparatus can be reduced.

In another possible implementation, the first signal threshold may be obtained by using second configuration information (or may be delivered by a third communication apparatus). For example, as shown in step 401 shown in FIG. 4, the third communication apparatus may send the second configuration information. Correspondingly, the first communication apparatus receives the second configuration information. The second configuration information indicates the first signal threshold. The second configuration information may be included in a broadcast message, that is, the third communication apparatus broadcasts the first signal threshold. The first signal threshold is delivered by the third communication apparatus in a broadcast manner. This can help the third communication apparatus update the first signal threshold. For example, after the first communication apparatus enters an RRC connected state, the third communication apparatus may further send the first signal threshold by using a unicast message. After a plurality of first communication apparatuses separately enter the RRC connected state, first signal thresholds obtained by the plurality of first communication apparatuses may be the same or different. This is not limited in this embodiment of this application.

Before sending the second configuration information, the third communication apparatus may obtain the first signal threshold. For example, the third communication apparatus may set the first signal threshold based on a signal strength of a frequency band surrounding the third communication apparatus and a service range of the third communication apparatus. For another example, the third communication apparatus may set the first signal threshold based on a geographical location of a surrounding base station and a signal strength of a frequency band supported by the surrounding base station. Details are not listed one by one herein again.

It needs to be noted that, first, if the third communication apparatus broadcasts a specific signal threshold (for example, the first signal threshold), it may further implicitly indicate that there is a terrestrial network frequency band that needs to be protected (there is a frequency band whose frequency spacing from the first frequency band is less than a spacing threshold).

Second, if the broadcast message includes second indication information, and the second indication information may indicate that there is no information indicating that a terrestrial network frequency band needs to be protected (or may indicate that there is no information about a second frequency band or there is no second frequency band near the first frequency band), the first communication apparatus may send the signal on the first frequency band based on the second indication information. In this way, the first communication apparatus may send an uplink signal at any location of a satellite cell (including initiating random access, initiating a cell handover procedure, or the like).

Third, the broadcast message may alternatively not include the first signal threshold, but include first indication information. The first indication information may indicate that there is information indicating that a terrestrial network frequency band needs to be protected (or may indicate that there is a second frequency band, there is a frequency band whose frequency spacing from the first frequency band is less than the spacing threshold, or there is a second frequency band near the first frequency band). In this case, the first communication apparatus may determine, based on the broadcast message, not to send the signal on the first frequency band. That is, in an extreme case, if learning that there is a second frequency band near the first communication apparatus, the first communication apparatus may not detect a signal strength of the second frequency band, but directly determine not to send the signal on the first frequency band.

Fourth, the first communication apparatus may detect a signal strength of a second frequency band based on the first indication information. In other words, when learning that there is information indicating that a terrestrial network frequency band needs to be protected, the first communication apparatus may further detect the signal strength of the frequency band, to accurately estimate whether the first communication apparatus affects a surrounding frequency band. In this implementation, the first indication information and the first signal threshold may be included in the same broadcast message; or the first indication information is included in the broadcast message, and the first signal threshold is defined in the standard. Details are not described one by one herein again.

Fifth, a rule is preset. For example, if the broadcast message does not include any indication related to the first frequency band, it implicitly indicates that there is no terrestrial network frequency band that needs to be protected, and the first communication apparatus may send the signal on the first frequency band. If the broadcast message includes at least one of the first indication information or the first signal threshold, it indicates that there is a terrestrial network frequency band that needs to be protected.

The broadcast message shown above is merely an example. If the first communication apparatus is in the RRC connected state, the foregoing descriptions of the broadcast message are also applicable to the unicast message or a multicast message.

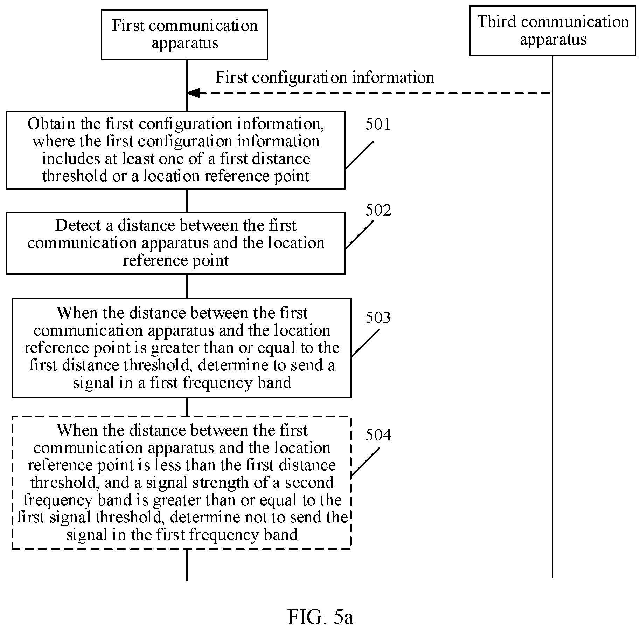

It may be understood that the first to fifth descriptions in this embodiment of this application are also applicable to FIG. 5a. Details are not described one by one in the following again.

403: The first communication apparatus detects the signal strength of the second frequency band, where the second frequency band is used by a second communication apparatus to receive a signal.

The first communication apparatus may be understood as a communication apparatus in the satellite cell, a communication apparatus supporting satellite communication, or a communication apparatus supporting communication by using n256 or n255. The second communication apparatus may be understood as a communication apparatus in a terrestrial cell, or a communication apparatus that supports terrestrial communication. It may be understood that the frequency band supported by the second communication apparatus is not described in detail herein. Alternatively, at least one of the first communication apparatus and the second communication apparatus may support both a satellite frequency band and a terrestrial frequency band.

The second frequency band may be understood as a frequency band in which the second communication apparatus receives the signal, a frequency band supported by a terminal device in the terrestrial cell, a terrestrial network frequency band that needs to be protected, or a terrestrial frequency band. For example, the second frequency band may include n2, n25, n34, and n70 shown in FIG. 3. Alternatively, the second frequency band may include any one or more of n2DL, n25DL, n34DL, and n70DL. It may be understood that the second frequency band shown herein is shown by using FIG. 3 as an example. If a frequency band supported by the satellite cell changes, that is, the first frequency band includes another frequency band, the second frequency band may also change accordingly. For example, when a duplexer supporting n256 may reuse a duplexer of n65, a frequency band such as n39 adjacent to or overlapping n65 needs to be considered. Certainly, the second frequency band shown in this embodiment of this application may alternatively be another frequency band not adjacent to or overlapping the first frequency band. Details are not listed one by one herein again.

The signal strength of the second frequency band may include signal quality of the second frequency band, interference to the second frequency band, or the like. A specific representation manner of the signal strength is not limited in this embodiment of this application. To be specific, the signal strength of the second frequency band may be represented by using a level of the signal quality, or the signal strength of the second frequency band may be represented by using a degree of this signal interference. It may be understood that the signal quality and the signal interference may correspond to different first signal thresholds. To be specific, when the signal strength is represented in a manner of the signal quality or the signal interference, whether the signal quality and the signal interference correspond to a same first signal threshold is not limited in this embodiment of this application. For ease of understanding, the following describes, in the manner of the signal quality or the signal interference, a specific manner of determining, based on a relationship between the signal strength and the signal threshold, whether to send the signal on the first frequency band.

It needs to be noted that the signal strength of the second frequency band may be determined based on the signal quality or the signal interference. For example, the signal strength of the second frequency band may be determined in a form of a satellite signal/the signal interference, or may be determined in a form of the satellite signal/the signal quality. In other words, when obtaining the signal quality or the signal interference of the second frequency band through detection, the first communication apparatus may further determine the signal strength of the second frequency band in another calculation manner. In the foregoing case, a person skilled in the art may perform corresponding adjustment based on the relationship between the signal strength and the signal threshold shown below. For example, the following uses an example in which the signal strength of the second frequency band includes the signal quality or the signal interference of the second frequency band. Therefore, when the signal strength of the second frequency band is less than or equal to the first signal threshold, the first communication apparatus may determine to send the signal on the first frequency band. However, when the signal strength of the second frequency band is equal to the satellite signal/the signal quality of the second frequency band, or the signal strength of the second frequency band is equal to the satellite signal/the signal interference of the second frequency band, in other words, the signal strength of the second frequency band is greater than a specific threshold, the first communication apparatus may determine to send the signal on the first frequency band (or once the signal strength of the second frequency band is less than a specific threshold, the first communication apparatus may determine not to send the signal on the first frequency band). Further, when the signal strength of the second frequency band is equal to the satellite signal/the signal quality of the second frequency band, or the signal strength of the second frequency band is equal to the satellite signal/the signal interference of the second frequency band, a signal threshold corresponding to a frequency band with a smaller frequency spacing from the first frequency band is not less than a signal threshold corresponding to a frequency band with a larger frequency spacing from the first frequency band. Details are not listed one by one herein again.

It may be understood that a sequence of step 402 and step 403 is not limited in this embodiment of this application.

404: When the signal strength of the second frequency band is less than or equal to the first signal threshold, determine to send the signal on the first frequency band.

The first frequency band may be understood as a frequency band in which the first communication apparatus sends the signal, a frequency band supported by a terminal device in the satellite cell, or a satellite frequency band. For example, the first frequency band may include n255 or n256 shown in FIG. 3. For another example, the first frequency band may include n255UL or n256UL shown in FIG. 3.

A relationship between the first frequency band and the second frequency band may meet at least one of the following:
1. A frequency spacing between the first frequency band and the second frequency band is less than or equal to a spacing threshold. The spacing threshold shown herein is for describing the relationship between the first frequency band and the second frequency band. For example, the spacing threshold may be defined in the standard, or may be delivered by the second communication apparatus to the first communication apparatus, or may be autonomously set by the first communication apparatus. Optionally, when obtaining the second frequency band through detection, the first communication apparatus may determine the relationship between the second frequency band and the first frequency band based on the spacing threshold, and then determine, based on the relationship between the second frequency band and the first frequency band, whether to detect the signal strength of the second frequency band. In some embodiments of this application, when the frequency spacing between the second frequency band and the first frequency band is less than the spacing threshold, the first communication apparatus may detect the signal strength of the second frequency band, and then determine, based on the signal strength of the second frequency band and the first signal threshold, whether to send the signal on the first frequency band. In some other embodiments of this application, when the first communication apparatus obtains the second frequency band through detection, provided that the frequency spacing between the second frequency band and the first frequency band is less than the spacing threshold, the first communication apparatus may determine not to send the signal on the first frequency band. Optionally, when the frequency spacing between the second frequency band and the first frequency band is greater than the spacing threshold (for example, a frequency band far away from n255 or n256), the first communication apparatus may directly send the signal on the first frequency band. Optionally, when obtaining the second frequency band through detection, the first communication apparatus may alternatively not determine the relationship between the second frequency band and the first frequency band based on the spacing threshold, but determine, based on the signal strength of the second frequency band, whether to send the signal on the first frequency band (as described in step 404).

For example, for two frequency bands overlapping or adjacent to each other, a frequency spacing between the two frequency bands may be considered as 0. For example, a frequency spacing between n256 and the following frequency band: n2, n25, n70, n34, n39, n65, or the like may be considered as 0. For example, the spacing threshold may be 0 or a positive number greater than 0. It may be understood that the frequency spacing shown in this embodiment of this application may be a distance between frequencies closest to each other in the two frequency bands, a distance between any two frequencies in the two frequency bands, or a distance between a current satellite frequency obtained by the first communication apparatus through detection and another detected frequency. That is, the first communication apparatus may determine the frequency spacing between the first frequency band and the second frequency band based on a specific implementation. An implementation in which the first communication apparatus determines the frequency spacing between the first frequency band and the second frequency band is not limited in this embodiment of this application.

2. When the signal strength of the second frequency band is greater than the first signal threshold, it indicates that if the first communication apparatus sends the signal on the first frequency band, receiving performance of the second communication apparatus is affected. In other words, when the signal strength of the second frequency band is greater than the first signal threshold, if the first communication apparatus sends the signal on the first frequency band, the uplink signal sent by the first communication apparatus affects the receiving performance (or signal receiving performance) of the second communication apparatus. Alternatively, it may be understood as that the uplink signal sent by the first communication apparatus causes interference (or causes specific interference) to a downlink signal received by the second communication apparatus. In this way, when the signal strength of the second frequency band is less than or equal to the first signal threshold, the first communication apparatus may send the signal on the first frequency band.

It may be understood that when the signal strength of the second frequency band is equal to the first signal threshold, the first communication apparatus may alternatively not send the signal on the first frequency band. For example, when the signal strength of the second frequency band is equal to the first signal threshold, it may alternatively indicate that if the first communication apparatus sends the signal on the first frequency band, receiving performance of the second communication apparatus is affected. In this embodiment of this application, when the signal strength of the second frequency band is equal to the first signal threshold, whether the first communication apparatus can send the signal on the first frequency band is not limited.

For example, when sending the signal on the first frequency band, the first communication apparatus may be in a non-connected state, for example, initiates random access on the first frequency band or sends a message 1 (message 1, Msgl); or the first communication apparatus is in the RRC connected state, for example, sends the uplink signal to the third communication apparatus on the first frequency band. A specific type or content of the uplink signal is not limited in this embodiment of this application.

In a possible implementation, the method shown in FIG. 4 further includes the following step.

405: When the signal strength of the second frequency band is greater than the first signal threshold, determine not to send the signal on the first frequency band.

For example, if the signal quality of the second frequency band is greater than the first signal threshold, it indicates that there is the second frequency band that is used by the terminal device in the terrestrial cell and that is near the first communication apparatus (or it indicates that there is coverage of a special protection frequency band in an international mobile communications (international mobile telecommunications, IMT) mobile network near the first communication apparatus). In this way, the first communication apparatus cannot send the signal or operate on the first frequency band. For example, if the signal interference of the second frequency band is greater than the first signal threshold, it indicates that the frequency spacing between the first frequency band and the second frequency band is smaller (if the frequency spacing is larger, the first communication apparatus may not obtain the interference to the second frequency band through detection). In this way, the first communication apparatus cannot send the signal or operate on the first frequency band. For example, the first communication apparatus may detect a synchronization frequency in the second frequency band, and then determine whether the interference to the second frequency band exists.

It needs to be noted that, when the first communication apparatus supports both the satellite frequency band and the terrestrial frequency band, and the first communication apparatus finds that the signal strength of the second frequency band is stronger and a signal strength of the first frequency band is weaker, the first communication apparatus may determine not to send the signal on the first frequency band, but send the signal in the second frequency band (for example, the first communication apparatus is located at an edge of the satellite cell, or the first communication apparatus is located at edges of the satellite cell and the terrestrial cell). For example, if the signal strength of the second frequency band is greater than the first signal threshold (only as an example), and the signal strength of the first frequency band is less than a signal threshold A, the first communication apparatus may access the terrestrial cell, for example, initiate random access via the terrestrial cell or send the uplink signal. In this way, the first communication apparatus may determine, based on a signal strength of the terrestrial frequency band supported by the first communication apparatus, the signal strength of the first frequency band, and/or the like, to send the signal on the first frequency band, or may determine not to send the signal on the first frequency band.

It may be understood that step 404 and step 405 in the method shown in FIG. 4 do not coexist. For example, the first communication apparatus may perform step 404 in some of a plurality of times of performing the method provided in this embodiment of this application; and perform step 405 in some other times.

In a possible implementation, different frequency bands may correspond to a same signal threshold, for example, the first signal threshold. For example, for all frequency bands whose frequency spacings from the first frequency band are less than the spacing threshold, whether the signal is sent on the first frequency band may be determined by using a same signal threshold. In this implementation, the second configuration information in step 401 includes one first signal threshold. It may be understood that the first signal threshold may have different values or a same value in different implementations. This is not limited in this embodiment of this application.

This implementation is simple and feasible, and can be further compatible with communication efficiency between the satellite communication and the terrestrial communication.

In another possible implementation, different frequency bands may correspond to different signal thresholds based on frequency spacings from the first frequency band. In other words, a different signal threshold may be set based on the frequency spacing between the first frequency band and the second frequency band. In this way, the second configuration information includes at least one of the following information: priorities of at least two frequency bands or thresholds corresponding to frequency bands with different priorities (for example, one item is defined in the standard, and the other item is configured by using the second configuration information; or both two items are configured by using the second configuration information). The at least two frequency bands include the second frequency band, the thresholds include a signal threshold, and the signal threshold includes the first signal threshold.

Optionally, the signal threshold corresponding to the frequency band with the smaller frequency spacing from the first frequency band is not greater than the signal threshold corresponding to the frequency band with the larger frequency spacing from the first frequency band. To be specific, a frequency band (for example, the second frequency band) closer to n256 or n255 indicates a smaller signal threshold. In this way, when the second frequency band obtained by the first communication apparatus through detection is less than a signal threshold corresponding to the second frequency band, it indicates that a signal threshold of another frequency band slightly far away from the first frequency band may alternatively be less than a respective corresponding signal threshold. Therefore, the first communication apparatus may determine, by detecting the signal strength of the frequency band with the small frequency spacing from the first frequency band, whether to send the signal on the first frequency band. In this implementation, not only a workload of measuring the signal strength by the first communication apparatus can be reduced, but also measurement overheads can be reduced.

Optionally, different priorities may be set based on the frequency spacings from the first frequency band, and the different priorities may have different signal thresholds. A smaller frequency spacing from the first frequency band indicates a higher priority. For example, a signal threshold of a frequency band with a low priority is not less than a signal threshold of a frequency band with a high priority. For example, the second frequency band may be a frequency band with a highest priority in the at least two frequency bands. The different priorities are set, so that the first communication apparatus can detect frequency bands based on the different priorities. It is assumed that a signal strength of a frequency band with a high priority is greater than a signal threshold corresponding to the frequency band. In this case, the first communication apparatus may directly not send the signal on the first frequency band. That is, the first communication apparatus does not need to detect signal strengths of all frequency bands near the first frequency band, so that the workload of measuring the signal strengths by the first communication apparatus can be reduced, and the measurement overheads can be reduced.

As shown above, when the first communication apparatus obtains, through detection, that the second frequency band is less than or equal to the signal threshold (for example, the first signal threshold) corresponding to the second frequency band, the first communication apparatus may determine to send the signal on the first frequency band. Certainly, if the signal strength of the frequency band with the high priority is less than or equal to the signal threshold corresponding to the frequency band, the first communication apparatus may continue to detect a signal strength of a frequency band with a second priority. By analogy, if a signal strength of a frequency band with each priority is less than or equal to a signal threshold corresponding to the frequency band, the first communication apparatus may send the signal on the first frequency band. In this manner, because the different frequency bands have the different signal thresholds, and the first communication apparatus can accurately determine, by detecting signal strengths of the frequency bands with the different priorities, interference from the first frequency band to the frequency bands, receiving performance of the first frequency band for the frequency bands is maximally considered, and interference from the satellite cell to the terrestrial cell is minimized.

It may be understood that, for the priorities of the different frequency bands, refer to a method shown in the following Example 2. Details are not described one by one herein.

It needs to be noted that the priorities of the at least two frequency bands (for example, including the second frequency band) and the thresholds (for example, including the first signal threshold) corresponding to the frequency bands with the different priorities may be included in same information, or may be included in different information. This is not limited in this embodiment of this application. For example, the third communication apparatus may separately configure, by using two pieces of information, the priorities of the at least two frequency bands and the thresholds corresponding to the frequency bands with the different priorities. If the third communication apparatus needs to update the priorities of the at least two frequency bands, the third communication apparatus may configure the priorities of the at least two frequency bands by using one piece of independent information.

In this embodiment of this application, in a communication scenario in which the satellite cell and the terrestrial cell coexist, when there is a frequency band in a same frequency band of the satellite cell or adjacent to the frequency band of the satellite cell, the satellite cell and the terrestrial cell may directly interfere with each other. Consequently, communication of the terrestrial cell is affected. In this way, the first communication apparatus may first detect a signal strength of a frequency band of the terrestrial cell, and then send an uplink signal on the frequency band of the satellite cell when the signal strength of the frequency band of the terrestrial cell is less than or equal to the first signal threshold. Therefore, interference to the terrestrial cell caused when the first communication apparatus directly sends the uplink signal is avoided, and the receiving performance of the second communication apparatus is maximally ensured.

In the satellite communication method shown in FIG. 4, whether the signal can be sent on the first frequency band is determined based on the signal strength. In a satellite communication method shown in FIG. 5a, whether the signal can be sent on the first frequency band is determined based on a distance. For example, if intending to access the satellite cell, the first communication apparatus in the satellite cell may measure the frequency band in the terrestrial cell (as shown in FIG. 4). Actually, the interference from the uplink signal sent by the first communication apparatus to the terrestrial cell is also related to a location of the first communication apparatus in the satellite cell. Usually, the satellite cell is large. If the first communication apparatus is far away from the terrestrial cell (which indicates that interference between the first frequency band and the second frequency band is small), the second communication apparatus in the terrestrial cell may not be affected; or if the first communication apparatus is close to the terrestrial cell (which indicates that interference between the first frequency band and the second frequency band is large), the second communication apparatus in the terrestrial cell may be affected. Therefore, in the method shown in FIG. 5a, the first communication apparatus may determine, based on the distance, whether the first communication apparatus can send the signal on the first frequency band.

FIG. 5a is a schematic flowchart of a satellite communication method according to an embodiment of this application. In the method shown in FIG. 5a, for descriptions of a first communication apparatus, a second communication apparatus, a first frequency band, and a second frequency band, refer to FIG. 4 (for example, related descriptions of step 403 and step 404). Details are not described one by one in the following again. As shown in FIG. 5a, the method includes the following steps.

501: The first communication apparatus obtains first configuration information, where the first configuration information includes at least one of a first distance threshold or a location reference point.

The first distance threshold is a threshold for determining a distance between the first frequency band and the second frequency band, and the first distance threshold may indicate to determine, based on the first distance threshold, whether to send a signal on the first frequency band. The location reference point may be indicated in a form of coordinates, or may be indicated in a form of a specific reference object (for example, a terrestrial base station). A specific form of the location reference point is not limited in this embodiment of this application.

For example, a third communication apparatus may send the first configuration information. The first communication apparatus receives the first configuration information. Therefore, the at least one of the first distance threshold or the location reference point is obtained.

502: The first communication apparatus detects a distance between the first communication apparatus and the location reference point.

503: When the distance between the first communication apparatus and the location reference point is greater than or equal to the first distance threshold, determine to send the signal on the first frequency band.

In a possible implementation, different frequency bands may correspond to a same distance threshold, for example, the first distance threshold. For example, for all frequency bands whose frequency spacings from the first frequency band are less than a spacing threshold, whether the signal is sent on the first frequency band may be determined by using a same distance threshold. In this implementation, the first distance threshold (or the location reference point) may be defined in a standard; or is obtained by using the first configuration information. In this way, the first configuration information may include the at least one of the first distance threshold or the location reference point.

In another possible implementation, different frequency bands may correspond to different distance thresholds based on frequency spacings from the first frequency band. In other words, different distance thresholds may be set based on a frequency spacing between the first frequency band and the second frequency band. In this implementation, based on this, the method shown in FIG. 5a may further include: The first communication apparatus obtains second configuration information, where the second configuration information includes at least one of the following information: priorities of at least two frequency bands or thresholds corresponding to frequency bands with different priorities (for example, one item is defined in the standard, and the other item is configured by using the second configuration information; or both two items are configured by using the second configuration information). The at least two frequency bands include the second frequency band, the thresholds include a distance threshold, and the distance threshold includes the first distance threshold.

When different frequency bands correspond to different distance thresholds, the first configuration information may include the location reference point, and the second configuration information includes the at least one of the following information: the priorities of the at least two frequency bands or the thresholds corresponding to the frequency bands with the different priorities. Alternatively, the location reference point is defined in the standard, and the first configuration information and the second configuration information are same information. For example, the second configuration information includes the at least one of the following information: the priorities of the at least two frequency bands or the thresholds corresponding to the frequency bands with the different priorities. Alternatively, the first configuration information includes a distance threshold corresponding to the second frequency band (or includes the location reference point and a distance threshold corresponding to the second frequency band), and the second configuration information includes a distance threshold corresponding to another frequency band. The second frequency band and the another frequency band are separately indicated, so that the first communication apparatus can preferentially measure the second frequency band. It may be understood that specific content of the first configuration information and the second configuration information is not limited in this embodiment of this application.

Optionally, a distance threshold corresponding to a frequency band with a smaller frequency spacing from the first frequency band is not less than a distance threshold corresponding to a frequency band with a larger frequency spacing from the first frequency band. To be specific, a frequency band (for example, the second frequency band) closer to n256 or n255 has a larger distance threshold. In this way, when the first communication apparatus obtains, through detection, that the distance between the first communication apparatus and the location reference point is greater than or equal to a distance threshold corresponding to the first communication apparatus, it indicates that the first communication apparatus is far away from a terrestrial cell, and receiving performance of the second communication apparatus in the terrestrial cell may not be affected. Therefore, the first communication apparatus may determine, based on the distance between the first communication apparatus and the location reference point and the distance thresholds corresponding to the different frequency bands, to send the signal on the first frequency band. In this implementation, a geographical location is divided at a finer granularity (for example, based on the distance), so that the first communication apparatus can quickly estimate, based on the distance, a status of interference from the first frequency band to each frequency band, and satellite communication and terrestrial communication are compatible with each other.

Optionally, different priorities may be set based on the frequency spacings from the first frequency band, and the different priorities may have different distance thresholds. A smaller frequency spacing from the first frequency band indicates a higher priority. For example, a distance threshold of a frequency band with a low priority is not greater than a distance threshold of a frequency band with a high priority. In other words, a frequency band with a smaller frequency spacing from the first frequency band may have a larger distance threshold, and a frequency band with a larger frequency spacing from the first frequency band may have a smaller distance threshold. This is because the frequency band with the smaller frequency spacing from the first frequency band is more affected by the first frequency band. The larger distance threshold is set, so that when the distance between the first communication apparatus and the location reference point is greater than the larger distance threshold, receiving performance of the second communication apparatus is not affected.

For example, the second frequency band may be a frequency band with a highest priority in the at least two frequency bands, and the first distance threshold may be a distance threshold corresponding to the frequency band with the highest priority. The different priorities are set, so that the first communication apparatus can determine, based on the distance thresholds corresponding to the different priorities, whether to send the signal on the first frequency band. It is assumed that the distance between the first communication apparatus and the location reference point is greater than a distance threshold corresponding to a frequency band with a high priority. In this case, the first communication apparatus may send the signal on the first frequency band.

It may be understood that, for the priorities of the different frequency bands, refer to a method shown in the following Example 3. Details are not described one by one herein.

It may be understood that when the distance between the first communication apparatus and the location reference point is greater than the first distance threshold, the first communication apparatus may determine to send the signal on the first frequency band. In this way, measurement overheads of the first communication apparatus can be minimized. It may be understood that, when the distance between the first communication apparatus and the location reference point is equal to the first distance threshold, the first communication apparatus may perform step 504. When the distance between the first communication apparatus and the location reference point is equal to the first distance threshold, whether the first communication apparatus sends the signal on the first frequency band is not limited in this embodiment of this application.

When the distance between the first communication apparatus and the location reference point is less than the first distance threshold, whether the signal is sent on the first frequency band may be further determined with reference to the signal strength shown in FIG. 4. It may be understood that step 503 and step 504 in the method shown in FIG. 5a do not coexist. For example, the first communication apparatus may perform step 503 in some of a plurality of times of performing the method provided in this embodiment of this application; and perform step 504 in some other times.

In a possible implementation, the method shown in FIG. 5a further includes the following step.

504: When the distance between the first communication apparatus and the location reference point is less than the first distance threshold, and the signal strength of the second frequency band is greater than or equal to the first signal threshold, determine not to send the signal on the first frequency band.

When the distance between the first communication apparatus and the location reference point is less than the first distance threshold, impact between the first frequency band and the second frequency band can be more accurately determined by detecting the signal strength of the second frequency band. Certainly, if the distance between the first communication apparatus and the location reference point is less than the first distance threshold, and the signal strength of the second frequency band is less than or equal to the first signal threshold, that the signal is sent on the first frequency band may be determined.

It may be understood that the signal strength of the second frequency band may be measured after, before, or when the first communication apparatus obtains the distance between the first communication apparatus and the location reference point (for example, only the signal strength may be measured, and a relationship between the signal strength and the signal threshold is then determined when the distance between the first communication apparatus and the location reference point is less than the first distance threshold). A specific sequence for the first communication apparatus to detect the signal strength of the second frequency band is not limited in this embodiment of this application. Certainly, if the distance threshold is determined based on a relationship between a signal strength of a terrestrial frequency band and the geographical location, that is, the distance threshold can be accurately for measuring impact or interference between the first frequency band and the second frequency band, to be specific, provided that the distance between the first communication apparatus and the location reference point is greater than the first distance threshold, interference from the first frequency band to the second frequency band is small, the first communication apparatus may send the signal on the first frequency band; or if the distance between the first communication apparatus and the location reference point is less than the first distance threshold, that the signal is not sent on the first frequency band may be determined.

Optionally, when the distance between the first communication apparatus and the location reference point is less than the first distance threshold (the distance threshold corresponding to the second frequency band), or the distance between the first communication apparatus and the location reference point is less than the first distance threshold (for example, the distance threshold corresponding to the frequency band with the highest priority (for example, the second frequency band)) and is greater than or equal to a second distance threshold (for example, a distance threshold corresponding to a frequency band with a second highest priority), the first communication apparatus may alternatively narrow a range of a frequency band that needs to be detected by the first communication apparatus (in comparison with a case in which all overlapping and adjacent frequency bands need to be measured). For example, the first communication apparatus may not measure the frequency band with the second highest priority. If the distance between the first communication apparatus and the location reference point is less than the second distance threshold, the first communication apparatus may measure the frequency band with the highest priority and the frequency band with the second highest priority. Certainly, this manner shown herein of narrowing the range of the frequency band that needs to be detected is merely an example. It is assumed that the distance between the first communication apparatus and the location reference point is beyond the first distance threshold. In this case, the first communication apparatus may measure the frequency band with the highest priority. In this way, impact of the satellite communication on the terrestrial communication can be more accurately determined. In addition, when the distance between the first communication apparatus and the location reference point is beyond the first distance threshold, if a signal strength of the frequency band with the highest priority is less than or equal to a signal threshold corresponding to the frequency band, it indicates that interference from the first frequency band to another adjacent frequency band is weaker. Therefore, the first communication apparatus may generate the signal on the first frequency band. It is assumed that the distance between the communication apparatus and the location reference point is within the first distance threshold. In this case, the first communication apparatus may measure the frequency band with the highest priority and the frequency band with the second highest priority, for example, may preferentially measure the frequency band with the highest priority. It may be understood that, when there are other more priorities of frequency bands, the rest may be deduced by analogy. Details are not described one by one herein again. It may be understood that when the distance between the first communication apparatus and the location reference point is less than the first distance threshold, signal strengths of specific frequency bands measured by the first communication apparatus may be determined based on a specific implementation, or may be defined in the standard, or may be set by a network device. This is not limited in this embodiment of this application.

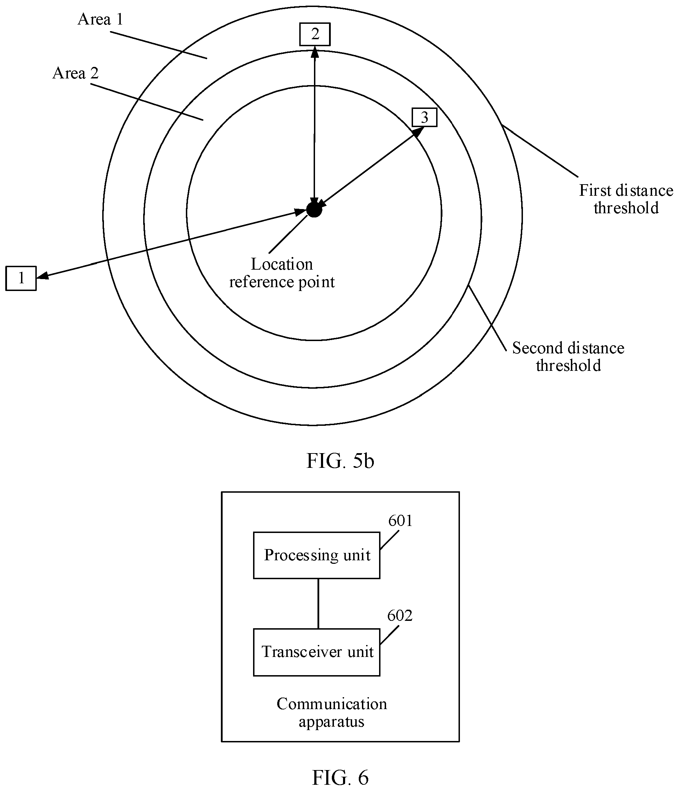

For example, as shown in FIG. 5b, a number 1, a number 2, and a number 3 shown in FIG. 5b may be understood as different terminal devices, for example, sequentially corresponding to a terminal device 1, a terminal device 2, and a terminal device 3, and all of the terminal devices support a satellite frequency band. It may be understood as that a first distance threshold is set based on a frequency band with a highest priority, and it may be understood as that a second distance threshold is set based on a frequency band with a second highest priority. Alternatively, it may be understood as that a first distance threshold is set based on a frequency band overlapping a first frequency band, and it may be understood as that a second distance threshold is set based on a frequency band adjacent to the first frequency band. If a distance between the terminal device 1 and a location reference point is greater than the first distance threshold (which may also be understood as that the terminal device 1 is outside a protection area), the terminal device 1 may send a signal on the first frequency band, for example, initiate random access or data communication. If a distance between the terminal device 2 and the location reference point is less than the first distance threshold and is greater than the second distance threshold (as shown in FIG. 5b, the terminal device 2 is located in a protection area 1), it may indicate that the terminal device 2 is close to a terrestrial cell (for example, a distance between the terminal device 2 and the terrestrial cell is less than a distance between the terminal device 1 and the terrestrial cell), but there is still a specific distance. Therefore, the terminal device 2 may measure a signal strength of the frequency band with the highest priority, to determine, based on the signal threshold of the frequency band with the highest priority, whether to send a signal on the first frequency band. If a distance between the terminal device 3 and the location reference point is less than the second distance threshold (as shown in FIG. 5b, the terminal device 3 is located in a protection area 2), it may indicate that the terminal device 3 is close to the terrestrial cell. Therefore, the terminal device 3 may measure the signal strength of the frequency band with the highest priority and a signal strength of the frequency band with the second highest priority, to determine whether to send a signal on the first frequency band.

In this embodiment of this application, the first communication apparatus determines, based on the distance threshold, whether to send the signal on the first frequency band, so that receiving performance of the second communication apparatus can be maximally ensured. In addition, when the distance between the first communication apparatus and the location reference point is greater than the first distance threshold, the first communication apparatus may determine to send the signal on the first frequency band. Therefore, measurement overheads of the first communication apparatus can be further minimized.

It may be understood that, in the methods shown in FIG. 4 and FIG. 5a, after sending the signal on the first frequency band, the first communication apparatus may further continue to detect a signal strength of a third frequency band; and if the signal strength of the third frequency band is greater than or equal to a signal threshold (for example, the second signal threshold) corresponding to the third frequency band, the first communication apparatus may exit an RRC connected state, initiate a cell handover or cell reselection, skip sending an uplink signal until the signal strength of the third frequency band is less than the signal threshold corresponding to the third frequency band, or the like. It may be understood that the third frequency band shown in this embodiment of this application may be a frequency band near the first frequency band, or may be the same as or different from the second frequency band. This is not limited in this embodiment of this application. It may be understood that for specific descriptions of the third frequency band, refer to the second frequency band. Details are not described one by one herein again.

The following describes, with reference to specific examples, the method provided in this embodiment of this application.

### Example 1

(1) Before accessing a corresponding satellite frequency band (for example, n256 or n256), a satellite terminal searches for a downlink signal in special protection frequency bands (for example, n2, n25, n34, and n70) nearby.

In this embodiment of this application, the special protection frequency bands may be referred to as IMT special protection frequency bands, terrestrial network special protection frequency bands, mobile network special protection frequency bands, or the like. For descriptions of the special protection frequency bands, refer to the foregoing descriptions of the second frequency band. For example, the special protection frequency bands may include the second frequency band.

It may be understood that, when the satellite terminal does not have prior information of frequency bands of a neighboring cell (for example, the satellite terminal cannot learn whether there are special protection frequency bands near the satellite terminal, or the network device does not broadcast whether there are terrestrial network frequency bands that need to be protected), whether the satellite terminal can send a signal or operate may be determined by detecting all possible frequency bands.

(2) If it is detected that signal strengths of protection frequency band exceed the first signal threshold (which may also be referred to as that thresholds of the protection frequency bands exceed the threshold), it indicates that coverage of the special protection frequency bands is included nearby. In this case, the satellite terminal cannot send a signal or operate in a satellite frequency band.

(3) If it is detected that signal strengths of the protection frequency bands do not exceed the first signal threshold, it indicates that coverage of the special protection frequency bands is not included nearby. In this case, the satellite terminal may normally access a satellite network (for example, initiate random access).

In other words, before accessing a corresponding satellite frequency band, the satellite terminal needs to search for whether there are the special protection frequency bands nearby.

(4) After accessing the corresponding satellite frequency band, the satellite terminal may periodically search for whether there is a downlink signal in special protection frequency bands (for example, the third frequency band shown above) nearby.

Optionally, after accessing the corresponding satellite frequency band, the satellite terminal may search for, when a geographical location of the satellite terminal changes, whether there is the downlink signal in the special protection frequency bands nearby.

(5) If that signal strengths of the protection frequency bands exceed the first signal threshold is obtained through detection, it indicates that the coverage of the special protection frequency band is included nearby. In this case, the satellite terminal may send a UE coexistence protection message to a satellite network, and/or exit from a connected state of the satellite frequency band or perform cell reselection.

In this embodiment of this application, before or after accessing a satellite cell, the satellite terminal detects all terrestrial network frequency bands that may need to be protected, so that it can be ensured that communication of the satellite terminal does not cause interference to a terminal in a terrestrial network, or interference to the terminal in the terrestrial network is maximally avoided.

(6) If that signal strengths of the protection frequency bands do not exceed the first signal threshold is obtained through detection, the terminal device may continue to camp on the corresponding satellite frequency band for communication.

Usually, when initiating the random access, the terminal device does not consider both the satellite frequency band and the terrestrial frequency band, and does not consider interference between two networks. However, this embodiment of this application may be applied to a terminal that supports both the satellite frequency band and the terrestrial frequency band, and may be further applied to a communication scenario in which the satellite network and the terrestrial network coexist. In this way, mutual interference during the coexistence can be maximally avoided.

### Example 2

It can be learned from FIG. 3 that some frequency bands on a terrestrial network side are adjacent to the satellite frequency band, and some frequency bands overlap. For the overlapping frequency bands, an interference status may be more severe. Therefore, in this embodiment of this application, frequency bands (for example, the special protection frequency bands in the foregoing example) that need to be protected in the terrestrial network are grouped, and interference thresholds between different groups are different. For example, the frequency bands that need to be protected are divided into partial overlapping frequency bands (frequency bands with a priority of 1 shown in Table 1 or frequency bands with the highest priority shown above) and adjacent frequency bands (frequency bands with a priority of 2 shown in Table 2 or frequency bands with the second highest priority described above). The satellite terminal may preferentially measure signal strengths of the overlapping frequency bands. If interference to the overlapping frequency bands exceeds a threshold 1, the satellite terminal directly does not perform access or uplink transmission without measuring another frequency band, and waits for next measurement.

If interference to the overlapping frequency bands does not exceed the threshold 1, the satellite terminal selects a frequency band with a next priority to perform measurement. If interference to the adjacent frequency bands exceeds the threshold 2, the satellite terminal directly does not perform access or uplink transmission without measuring another frequency band, and waits for next measurement. If the interference to the adjacent frequency bands does not exceed the threshold 2, it indicates that the satellite terminal can normally perform cell selection, cell reselection, and access. Table 1 provides an example of a priority configuration. Table 1 is shown based on an example of the overlapping frequency bands and the adjacent frequency bands, and a threshold 1 in Table 1 is greater than or equal to a threshold 2. Certainly, a priority 3 may be further included in Table 1. Frequency bands corresponding to the priority 3 may be n1, n65, and n66, a corresponding threshold may be a threshold 3, and a threshold 2 is greater than or equal to the threshold 3.

**Table 1**

| Priority (also referred to as a frequency band grouping sequence) | Frequency band | Threshold |
|---|---|---|
| 1 | n2, n25, and n70 | Threshold 1 |
| 2 | n34, n39, and n65 | Threshold 2 |

It may be understood that, if the network device can obtain frequency bands existing in a terrestrial network, the network device may configure the frequency bands existing in the terrestrial network. In this way, when obtaining the frequency bands existing in the terrestrial network, the satellite terminal does not need to measure all protection frequency bands, but may perform measurement based on the frequency bands existing in the terrestrial network and obtained by the satellite terminal, and find a corresponding threshold through table lookup, to determine whether to send the signal on the first frequency band. If the network device cannot obtain the frequency bands existing in the terrestrial network, the satellite terminal may measure all frequency bands that need to be protected.

In this embodiment of this application, the IMT protection frequency bands are grouped. Different groups have different thresholds, and the different groups may have different priorities. Therefore, the satellite terminal may perform measurement based on the priorities and the thresholds of the groups, and determine whether to send the signal on the first frequency band.

In this embodiment of this application, the different priorities and the corresponding thresholds are configured for a relationship between the terrestrial network frequency bands and the satellite network frequency bands, so that measurement overheads of the satellite terminal can be reduced, and an interference status can be further determined more accurately.

### Example 3

In this embodiment of this application, a relative location of the satellite terminal in the satellite cell is considered. In the foregoing Example 1 and Example 2, the satellite terminal needs to measure the protection frequency bands provided that the satellite terminal is in the satellite cell and intends to access the satellite cell. Actually, interference caused to the terrestrial network when the satellite terminal performs access or sends the uplink signal is related to the location of the satellite terminal in the satellite cell. Because the satellite cell is extremely large, if the satellite terminal in the satellite cell is far away from a cell corresponding to the terrestrial network, the terrestrial network may not be affected. If the satellite terminal is close to a cell corresponding to the terrestrial network, a terminal in the cell corresponding to the terrestrial network may be affected.

In this embodiment of this application, the network device may set the protection area based on the frequency bands of the terrestrial cell (for example, determine the protection area based on the first distance threshold and the location reference point, or determine the protection area based on the relative location of the satellite cell and the terrestrial cell). If the terrestrial cell (which may also be referred to as a terrestrial neighboring cell, or a terrestrial cell in a neighboring cell of the satellite cell) surrounding the network device does not include the frequency bands that need to be protected, no corresponding indication is performed or the satellite terminal is indicated not to measure the protection frequency bands. In this way, if the satellite terminal does not receive any indication, or receives information indicating the satellite terminal not to measure the protection frequency bands, the satellite terminal may directly initiate access or perform communication, without measuring the protection frequency bands.

If the terrestrial cell surrounding the network device includes frequency bands that need to be protected, a protection area may be set based on the specific frequency bands, and a protection range may be delivered in a form of a broadcast message. For example, the network device broadcasts a location reference point (which may also be briefly referred to as a reference point) and a distance threshold (which may also be referred to as a distance threshold). In a possible implementation, when the satellite terminal is within this distance threshold range (that is, it indicates that a distance between the satellite terminal and the location reference point is less than the distance threshold), it indicates that the satellite terminal causes interference to the terminal in the terrestrial cell provided that the satellite terminal initiates the access or sends the uplink signal. Therefore, when finding, based on the location of the satellite terminal, that the satellite terminal is within the distance threshold range, the satellite terminal may directly determine that communication cannot be performed, without measuring a signal strength of a frequency band. When the satellite terminal is outside the protection area, it indicates that the satellite terminal still has an opportunity to perform access. Certainly, in another possible implementation, when the satellite terminal is outside the protection area, to more accurately estimate the impact between the first frequency band and the second frequency band, the satellite terminal may alternatively perform measurement (for example, measure signal strengths of frequency bands overlapping the first frequency band, or the signal strengths of the frequency bands overlapping the first frequency band and signal strengths of neighboring frequency bands). In still another possible implementation, when the satellite terminal is in the protection area, the satellite terminal may selectively measure some frequency bands. To be specific, the protection area is set based on the frequency bands of the terrestrial cell. Within the protection area, the satellite terminal does not need to perform measurement and cannot perform access or send the uplink signal, but outside the protection area, performs measurement and determines whether to perform access or send the signal.

Certainly, the network device may be divided into areas with a plurality of protection levels (for example, with different distance thresholds shown above), and the areas with the different protection levels correspond to frequency bands with the different protection levels. The protection area may be different distance ranges relative to the location reference point.

**Table 2**

| Priority (also referred to as a frequency band grouping sequence) | Frequency band | Threshold |
|---|---|---|
| 1 | n2, n25, and n70 | Threshold a |
| 2 | n34, n39, and n65 | Threshold b |
| 3 | n1, n65, and n66 | Threshold c |

As shown in Table 2, different groups of frequency bands may correspond to different thresholds. It may be understood that the priorities shown in Table 1 and Table 2 may also be referred to as levels, that is, different levels are set for the different groups of frequency bands. For example, an area determined based on the threshold a and the location reference point (or based on the threshold a, the threshold b, and the location reference point) may be referred to as an area 1, and an area determined based on the threshold b and the location reference point (or based on the threshold b, the threshold c, and the location reference point) may be referred to as an area 2. Details are not listed one by one herein again. Table 2 shown above may alternatively not include the 4^{th} row. It may be understood that, for the area 1 and the area 2 shown above, adaptively refer to the area 1 and the area 2 shown in FIG. 5b.

For example, when the satellite terminal is located in the area 2, if the satellite terminal performs communication, all terrestrial terminals that operate in protection frequency bands may be affected. In this way, the satellite terminal may determine not to send the signal. Alternatively, the satellite terminal may measure all possible protection frequency bands, or measure protection frequency bands indicated by all network devices, or measure protection frequency bands with a highest priority (for example, measure frequency bands overlapping the first frequency band, or protection frequency bands overlapping the first frequency band and indicated by the network device), and then determine, based on signal strengths of the protection frequency bands, whether to generate the signal on the first frequency band. When the satellite terminal is located in the area 1, the satellite terminal may be slightly far away from the terrestrial cell, and some adjacent frequency bands with a specific frequency spacing may not be affected by the communication of the satellite terminal. Therefore, the satellite terminal may narrow a frequency band range to perform measurement. By analogy, the satellite terminal determines, based on a geographical location area in which the satellite terminal is located, terrestrial protection frequency bands that may be affected when the satellite terminal accesses the satellite cell or communicates with a satellite network device.

In this embodiment of this application, different protection areas are set based on the different frequency bands. When the satellite terminal is in the area 2, interference may be caused to a plurality of protection frequency bands. When the satellite terminal is in the area 1, no interference is caused to some frequency bands, and measurement overheads can be reduced. The rest may be deduced by analogy. The satellite terminal performs measurement on frequency bands of different levels based on the location of the satellite terminal, and performs threshold determination.

In this embodiment of this application, the geographical location area is divided at a finer granularity, so that measurement overheads of the satellite terminal can be further reduced.

It needs to be noted that, in Table 1 and Table 2, there may alternatively be different thresholds for a same group of frequency bands. For example, when a same frequency band corresponds to two thresholds, the first communication apparatus may determine one of the two thresholds for the same frequency band based on a transmit power of the first communication apparatus. For example, when the transmit power of the first communication apparatus is less than a power threshold (which indicates less impact of the first frequency band on receiving performance of the second frequency band), the first communication apparatus may determine, based on a larger threshold of the two thresholds, whether to send the signal on the first frequency band. When the transmit power of the first communication apparatus is greater than a power threshold (which indicates great impact of the first frequency band on receiving performance of the second frequency band), the first communication apparatus may determine, based on a smaller threshold of the two thresholds, whether to send the signal on the first frequency band. It may be understood that when the transmit power of the first communication apparatus is equal to a power threshold, the first communication apparatus may select either of the two thresholds.

It needs to be noted that, in the method shown above, the first communication apparatus may set transmit powers with different levels, for example, set transmit powers with two levels. When the signal strength of the second frequency band is greater than the first signal threshold, if the first communication apparatus intends to send the signal on the first frequency band, the first communication apparatus may use a smaller transmit power, to minimize impact on the terrestrial communication. Certainly, the transmit powers with the two levels shown herein are merely an example. For example, the first communication apparatus may set transmit powers with more levels based on a requirement, and then determine, based on a relationship between the transmit powers and the signal strength of the second frequency band, whether to send the signal on the first frequency band.

It needs to be noted that descriptions of the frequency bands shown in this application are also applicable to frequencies. To be specific, the first frequency band described above may be replaced with a first frequency, and the second frequency band may be replaced with a second frequency. Therefore, the first communication apparatus may determine, based on a signal strength of the second frequency, whether to send a signal in the first frequency. Certainly, based on a relationship between a frequency and the first frequency, different frequencies may alternatively be grouped. For example, a frequency that is the same as the first frequency has a highest priority, and a frequency adjacent to the first frequency has a second highest priority. Different priorities may correspond to different thresholds. Details are not listed one by one herein again.

Communication apparatuses provided in embodiments of this application are described below.

In this application, the communication apparatus is divided into functional modules based on the foregoing method embodiments. For example, each functional module may be divided to each corresponding function, or two or more functions may be integrated into one processing module. The integrated module may be implemented in a form of hardware, or may be implemented in a form of a software functional module. It needs to be noted that, in this application, module division is an example, and is merely a logical function division. In actual implementation, another division manner may be used. The following describes in detail communication apparatuses in embodiments of this application with reference to FIG. 6 to FIG. 8.

FIG. 6 is a diagram of a structure of a communication apparatus according to an embodiment of this application. As shown in FIG. 6, the communication apparatus includes a processing unit 601 and a transceiver unit 602.

In some embodiments of this application, the communication apparatus may be the first communication apparatus shown above. For example, the first communication apparatus may include a terminal device, a chip, or the like. To be specific, the first communication apparatus may be configured to perform steps, functions, or the like performed by the first communication apparatus or the satellite terminal in the foregoing method embodiments.

The processing unit 601 is configured to: obtain a first signal threshold; detect a signal strength of a second frequency band; and when the signal strength of the second frequency band is less than or equal to the first signal threshold, determine to send a signal on a first frequency band.

It may be understood that, that the processing unit 601 is configured to obtain a first signal threshold may be understood as: The processing unit 601 inputs second configuration information via the transceiver unit 602, and then obtains the first signal threshold based on the second configuration information; the processing unit 601 may obtain the stored first signal threshold from a storage unit (not shown in FIG. 6); or the processing unit 601 may input the first signal threshold via the transceiver unit 602. A specific manner of the processing unit is not limited in this embodiment of this application.

It may be understood that the foregoing three steps may be performed by the same processing unit, or may be performed by different processing units. Details are not described one by one herein again.

For example, the transceiver unit 602 is configured to output an uplink signal.

For example, the processing unit 601 is further configured to: when the signal strength of the second frequency band is greater than the first signal threshold, determine not to send the signal on the first frequency band.

For example, the processing unit 601 is configured to: obtain first configuration information; and when a distance between the first communication apparatus and a location reference point is greater than or equal to the first distance threshold, determine to send the signal on the first frequency band.

For example, the processing unit 601 is further configured to obtain second configuration information.

For example, the processing unit 601 is specifically configured to: when receiving first indication information from a third communication apparatus, detect the signal strength of the second frequency band based on the first indication information.

For example, the processing unit 601 is further configured to: when receiving second indication information from the third communication apparatus, determine, based on the second indication information, to send the signal on the first frequency band.

For example, the processing unit 601 is specifically configured to: detect a signal strength of a third frequency band; and
when the signal strength of the third frequency band is greater than or equal to a second signal threshold, initiate a cell handover or cell reselection, exit a radio resource control RRC connected state, or skip sending of the uplink signal.

In this embodiment of this application, for descriptions of the first frequency band, the second frequency band, the first communication apparatus, the second communication apparatus, the first configuration information, the second configuration information, and the like, refer to descriptions in the foregoing method embodiments (including FIG. 4, FIG. 5a, Example 1 to Example 3, and the like). Details are not described one by one herein again.

It may be understood that specific descriptions of the transceiver unit and the processing unit described in this embodiment of this application are merely examples. For specific functions, steps, or the like of the transceiver unit and the processing unit, refer to the foregoing method embodiments. Details are not described herein.

FIG. 6 is reused. In some other embodiments of this application, the communication apparatus may be a third communication apparatus, and the third communication apparatus may include the network device, the chip, or the like shown above. To be specific, the communication apparatus may be configured to perform steps, functions, or the like performed by the third communication apparatus or the network device in the foregoing method embodiments.

The processing unit 601 is configured to obtain a first signal threshold.

The transceiver unit 602 is configured to output second configuration information.

In this embodiment of this application, for descriptions of the first frequency band, the second frequency band, the first communication apparatus, the second communication apparatus, the first configuration information, the second configuration information, and the like, refer to descriptions in the foregoing method embodiments (including FIG. 4, FIG. 5a, Example 1 to Example 3, and the like). Details are not described one by one herein again.

It may be understood that specific descriptions of the transceiver unit and the processing unit described in this embodiment of this application are merely examples. For specific functions, steps, or the like of the transceiver unit and the processing unit, refer to the foregoing method embodiments. Details are not described herein.

The foregoing describes the communication apparatus in this embodiment of this application. The following describes a possible product form of the communication apparatus. It should be understood that a product in any form that has a function of the communication apparatus in FIG. 6 falls within the protection scope of embodiments of this application. It should be further understood that the following descriptions are merely examples, and do not limit a product form of the communication apparatus in embodiments of this application.

In a possible implementation, in the communication apparatus shown in FIG. 6, the processing unit 601 may be one or more processors, and the transceiver unit 602 may be a transceiver. Alternatively, the transceiver unit 602 may be a sending unit and a receiving unit, the sending unit may be a transmitter, and the receiving unit may be a receiver. The sending unit and the receiving unit are integrated into one device, for example, a transceiver. In this embodiment of this application, the processor and the transceiver may be coupled, or the like. A manner of connecting the processor and the transceiver is not limited in this embodiment of this application. In a process of performing the foregoing method, a process of sending information in the foregoing method may be understood as a process of outputting the information by the processor. When outputting the information, the processor outputs the information to a transceiver, so that the transceiver transmits the information. After the information is outputted by the processor, other processing may further need to be performed before the information arrives at the transceiver. Similarly, a process of receiving information in the foregoing method may be understood as a process of receiving the input information by the processor. When the processor receives the input information, the transceiver receives the foregoing information, and inputs the information into the processor. Further, after the transceiver receives the information, other processing may need to be performed on the information before the information is input into the processor.

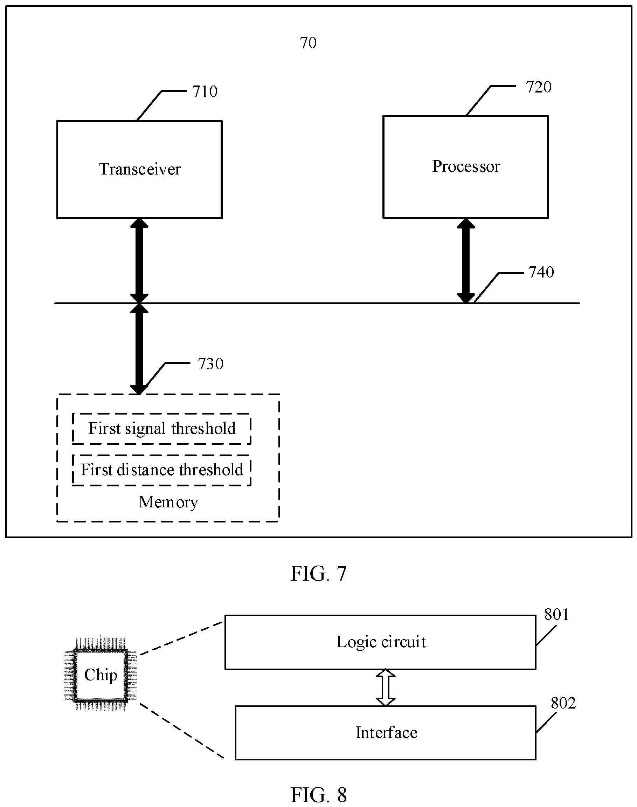

As shown in FIG. 7, the communication apparatus 70 includes one or more processors 720 and a transceiver 710.

For example, when the communication apparatus is configured to perform steps, methods, or functions performed by the first communication apparatus, the processor 720 is configured to: obtain a first signal threshold; detect a signal strength of a second frequency band; and when the signal strength of the second frequency band is less than or equal to the first signal threshold, determine to send a signal on a first frequency band.

For example, when the communication apparatus is configured to perform steps, methods, or functions performed by the third communication apparatus, the processor 720 is configured to obtain a first signal threshold; and the transceiver 710 is configured to send second configuration information.

In this embodiment of this application, for descriptions of the first frequency band, the second frequency band, the first communication apparatus, the second communication apparatus, the first configuration information, the second configuration information, and the like, refer to descriptions in the foregoing method embodiments (including FIG. 4, FIG. 5a, Example 1 to Example 3, and the like). Details are not described one by one herein again. It may be understood that for specific descriptions of the processor and the transceiver, refer to descriptions of the processing unit and the transceiver unit shown in FIG. 6. Details are not described herein again.

In various implementations of the communication apparatus shown in FIG. 7, the transceiver may include a receiver and a transmitter, the receiver is configured to perform a receiving function (or operation), and the transmitter is configured to perform a transmitting function (or operation). The transceiver is configured to communicate with another device/apparatus through a transmission medium.

Optionally, the communication apparatus 70 may further include one or more memories 730, configured to store program instructions and/or data. The memory 730 is coupled to the processor 720. The coupling in this embodiment of this application may be indirect coupling or a communication connection between apparatuses, units, or modules in an electrical form, a mechanical form, or another form, and is used for information exchange between the apparatuses, the units, or the modules. The processor 720 may cooperate with the memory 730. The processor 720 may execute the program instructions stored in the memory 730. Optionally, at least one of the one or more memories may be included in the processor. In this embodiment of this application, the memory 730 may store any one or more of a first signal threshold, a first distance threshold, or the like. For example, the memory shown in FIG. 7 shows only an example of the first signal threshold and the first distance threshold. It may be understood that, in FIG. 7, a dashed line indicates that the memory stores the first signal threshold and the first distance threshold. A reason lies in that the memory may store only the first signal threshold, only the first distance threshold, or both the first signal threshold and the first distance threshold.

A specific connection medium between the transceiver 710, the processor 720, and the memory 730 is not limited in this embodiment of this application. In this embodiment of this application, the memory 730, the processor 720, and the transceiver 710 are connected through a bus 740 in FIG. 7. The bus is represented by using a bold line in FIG. 7. The foregoing is merely an example for description. A connection manner of other components is not limited thereto. The bus may be classified into an address bus, a data bus, a control bus, and the like. For ease of representation, only one bold line is used to represent the bus in FIG. 7, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps in the methods disclosed with reference to embodiments of this application may be directly performed by a hardware processor, or may be performed by using a combination of hardware in the processor and a software module.

In this embodiment of this application, the memory may include but is not limited to a nonvolatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a portable read-only memory (Compact Disc Read-Only Memory, CD-ROM). The memory is any storage medium that can be used to carry or store program code in a form of an instruction or a data structure and that can be read and/or written by a computer (for example, the communication apparatus shown in this application), but is not limited thereto. The memory in this embodiment of this application may alternatively be a circuit or any other apparatus that can implement a storage function, and is configured to store the program instructions and/or the data.

The processor 720 is mainly configured to: process a communication protocol and communication data, control the entire communication apparatus, execute a software program, and process data of the software program. The memory 730 is mainly configured to store a software program and data. The transceiver 710 may include a control circuit and an antenna. The control circuit is mainly configured to: perform conversion between a baseband signal and a radio frequency signal and process the radio frequency signal. The antenna is mainly configured to: receive and send the radio frequency signal in a form of an electromagnetic wave. The input/output apparatus, such as a touchscreen, a display, or a keyboard, is mainly configured to: receive data input by a user and output data to the user.

After the communication apparatus is powered on, the processor 720 may read the software program in the memory 730, interpret and execute instructions of the software program, and process data of the software program. When data needs to be sent wirelessly, the processor 720 performs baseband processing on the to-be-sent data, and then outputs a baseband signal to a radio frequency circuit. The radio frequency circuit performs radio frequency processing on the baseband signal, and then sends a radio frequency signal through the antenna in the form of the electromagnetic wave. When data is sent to the communication apparatus, the radio frequency circuit receives the radio frequency signal through the antenna, converts the radio frequency signal into a baseband signal, and outputs the baseband signal to the processor 720. The processor 720 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

It may be understood that the communication apparatus shown in this embodiment of this application may alternatively include more components than those shown in FIG. 7, or the like. This is not limited in this embodiment of this application. The foregoing methods performed by the processor and the transceiver are merely examples. For specific steps performed by the processor and the transceiver, refer to the methods described above.

In another possible implementation, in the communication apparatus shown in FIG. 6, the processing unit 601 may be one or more logic circuits, and the transceiver unit 602 may be an input/output interface, which is also referred to as a communication interface, an interface circuit, an interface, or the like. Alternatively, the transceiver unit 602 may include a sending unit and a receiving unit. The sending unit may be an output interface, and the receiving unit may be an input interface. The sending unit and the receiving unit are integrated into one unit, for example, an input/output interface. As shown in FIG. 8, the communication apparatus shown in FIG. 8 includes a logic circuit 801 and an interface 802. The processing unit 601 may be implemented through the logic circuit 801, and the transceiver unit 602 may be implemented through the interface 802. The logic circuit 801 may be a chip, a processing circuit, an integrated circuit, a system on chip (system on chip, SoC), or the like. The interface 802 may be a communication interface, an input/output interface, a pin, or the like. For example, FIG. 8 shows an example in which the communication apparatus is a chip, and the chip includes a logic circuit 801 and an interface 802.

In this embodiment of this application, the logic circuit and the interface may be coupled to each other. A specific manner of connection between the logic circuit and the interface is not limited in this embodiment of this application.

For example, when the communication apparatus is configured to perform methods, functions, or steps performed by the first communication apparatus or the satellite terminal, the logic circuit 801 is configured to: obtain a first signal threshold; detect a signal strength of a second frequency band; and when the signal strength of the second frequency band is less than or equal to the first signal threshold, determine to send a signal on a first frequency band.

It may be understood that the foregoing three steps may be performed by the same logic circuit, or may be performed by different logic circuits. Details are not described one by one herein again.

For example, the interface 802 is configured to output an uplink signal.

For example, the logic circuit 801 is further configured to: when the signal strength of the second frequency band is greater than the first signal threshold, determine not to send the signal on the first frequency band.

For example, the logic circuit 801 is configured to: obtain first configuration information; and when a distance between the first communication apparatus and a location reference point is greater than or equal to the first distance threshold, determine to send the signal on the first frequency band.

For example, the logic circuit 801 is further configured to obtain second configuration information.

For example, the logic circuit 801 is specifically configured to: when receiving first indication information from a third communication apparatus, detect the signal strength of the second frequency band based on the first indication information.

For example, the logic circuit 801 is further configured to: when receiving second indication information from the third communication apparatus, determine, based on the second indication information, to send the signal on the first frequency band.

For example, the logic circuit 801 is specifically configured to: detect a signal strength of a third frequency band; and
when the signal strength of the third frequency band is greater than or equal to a second signal threshold, initiate a cell handover or cell reselection, exit a radio resource control RRC connected state, or skip sending of the uplink signal.

For example, when the communication apparatus is configured to perform methods, functions, or steps performed by the third communication apparatus or the network device, the logic circuit 801 is configured to obtain a first signal threshold; and the interface 802 is configured to output second configuration information.

It may be understood that the communication apparatus shown in embodiments of this application may implement the methods provided in embodiments of this application in a form of hardware, or may implement the methods provided in embodiments of this application in a form of software. This is not limited in embodiments of this application.

In this embodiment of this application, for descriptions of the first frequency band, the second frequency band, the first communication apparatus, the second communication apparatus, the first configuration information, the second configuration information, and the like, refer to descriptions in the foregoing method embodiments (including FIG. 4, FIG. 5a, and Example 1 to Example 3). Details are not described one by one herein again.

For specific implementations of the embodiments shown in FIG. 8, further refer to the foregoing embodiments. Details are not described herein again.

An embodiment of this application further provides a wireless communication system. The wireless communication system includes a first communication apparatus and a third communication apparatus. The first communication apparatus and the third communication apparatus may be configured to perform the method in any one of the foregoing embodiments (as shown in FIG. 4, FIG. 5a, or Example 1 to Example 3).

In addition, this application further provides a computer program. The computer program is used to implement operations and/or processing performed by the first communication apparatus device in the methods provided in this application.

This application further provides a computer program. The computer program is used to implement operations and/or processing performed by the third communication apparatus device in the methods provided in this application.

This application further provides a computer-readable storage medium. The computer-readable storage medium stores computer code. When the computer code is run on a computer, the computer is enabled to perform operations and/or processing performed by the first communication apparatus device in the methods provided in this application.

This application further provides a computer-readable storage medium. The computer-readable storage medium stores computer code. When the computer code is run on a computer, the computer is enabled to perform operations and/or processing performed by third communication apparatus device in the methods provided in this application.

This application further provides a computer program product. The computer program product includes computer code or a computer program. When the computer code or the computer program is run on a computer, operations and/or processing performed by the first communication apparatus device in the methods provided in this application are/is performed.

This application further provides a computer program product. The computer program product includes computer code or a computer program. When the computer code or the computer program is run on a computer, operations and/or processing performed by third communication apparatus device in the methods provided in this application are/is performed.

In the several embodiments provided in this application, it should be understood that the disclosed systems, apparatuses, and methods may be implemented in other manners. For example, the apparatus embodiments described above are merely examples. For example, unit division is merely logical function division, and may be another division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, in other words, may be located in one position, or may be distributed on a plurality of network units. Some or all of the units may be selected based on an actual requirement to achieve the technical effects of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a readable storage medium, and includes several instructions for indicating a computer device (which may be a personal computer, a server, a network device, or the like) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A satellite communication method, wherein the method comprises:
obtaining, by a first communication apparatus, a first signal threshold;
detecting, by the first communication apparatus, a signal strength of a second frequency band, wherein the second frequency band is used by a second communication apparatus to receive a signal; and
when the signal strength of the second frequency band is less than or equal to the first signal threshold, determining to send a signal on a first frequency band.

2. The method according to claim 1, wherein a frequency spacing between the first frequency band and the second frequency band is less than or equal to a spacing threshold.

3. The method according to claim 1 or 2, wherein the method further comprises:
when the signal strength of the second frequency band is greater than the first signal threshold, determining not to send the signal on the first frequency band.

4. The method according to any one of claims 1 to 3, wherein the method further comprises:
obtaining, by the first communication apparatus, first configuration information, wherein the first configuration information comprises at least one of a first distance threshold or a location reference point; and
the determining to send a signal on a first frequency band comprises:
when a distance between the first communication apparatus and the location reference point is greater than or equal to the first distance threshold, determining to send the signal on the first frequency band.

5. The method according to any one of claims 1 to 4, wherein the method further comprises:
obtaining, by the first communication apparatus, second configuration information, wherein the second configuration information comprises at least one of the following information: priorities of at least two frequency bands or thresholds corresponding to frequency bands with different priorities, the at least two frequency bands comprise the second frequency band, the thresholds comprise at least one of a signal threshold or a distance threshold, the signal threshold comprises the first signal threshold, and the distance threshold comprises the first distance threshold.

6. The method according to claim 5, wherein the second frequency band is a frequency band with a highest priority in the at least two frequency bands.

7. The method according to claim 5 or 6, wherein a signal threshold corresponding to a frequency band with a smaller frequency spacing from the first frequency band is not greater than a signal threshold corresponding to a frequency band with a larger frequency spacing from the first frequency band; and/or
a distance threshold corresponding to the frequency band with the smaller frequency spacing from the first frequency band is not less than a distance threshold corresponding to the frequency band with the larger frequency spacing from the first frequency band.

8. The method according to any one of claims 5 to 7, wherein a signal threshold of a frequency band with a low priority is not less than a signal threshold of a frequency band with a high priority; and/or
a distance threshold of the frequency band with the low priority is not greater than a signal threshold of the frequency band with the high priority.

9. The method according to any one of claims 1 to 8, wherein the detecting, by the first communication apparatus, a signal strength of a second frequency band comprises:
when receiving first indication information from a third communication apparatus, detecting the signal strength of the second frequency band based on the first indication information.

10. The method according to claim 9, wherein the method further comprises:
when receiving second indication information from the third communication apparatus, determining, based on the second indication information, to send the signal on the first frequency band.

11. The method according to any one of claims 1 to 10, wherein after the determining to send a signal on a first frequency band, the method further comprises:
detecting a signal strength of a third frequency band; and
when the signal strength of the third frequency band is greater than or equal to a second signal threshold, initiating a cell handover or cell reselection, or exiting a radio resource control RRC connected state.

12. The method according to any one of claims 1 to 11, wherein the first frequency band comprises n256; and
the second frequency band comprises any one or more of the following: n2, n25, n33, n39, and n70.

13. A satellite communication method, wherein the method comprises:
obtaining, by a third communication apparatus, a first signal threshold; and
sending, by the third communication apparatus, second configuration information, wherein the second configuration information comprises information about the first signal threshold.

14. The method according to claim 13, wherein the second configuration information comprises at least one of the following information: priorities of at least two frequency bands or thresholds corresponding to frequency bands with different priorities, the at least two frequency bands comprise a second frequency band, the thresholds comprise at least one of a signal threshold or a distance threshold, the signal threshold comprises the first signal threshold, and the distance threshold comprises a first distance threshold.

15. A first communication apparatus, wherein the apparatus comprises:
a processing unit, configured to obtain a first signal threshold, wherein
the processing unit is further configured to detect a signal strength of a second frequency band, wherein the second frequency band is used by a second communication apparatus to receive a signal; and
the processing unit is further configured to: when the signal strength of the second frequency band is less than or equal to the first signal threshold, determine to send a signal on a first frequency band.

16. The apparatus according to claim 15, wherein a frequency spacing between the first frequency band and the second frequency band is less than or equal to a spacing threshold.

17. The apparatus according to claim 15 or 16, wherein
the processing unit is further configured to: when the signal strength of the second frequency band is greater than the first signal threshold, determine not to send the signal on the first frequency band.

18. The apparatus according to any one of claims 15 to 17, wherein
the processing unit is further configured to obtain first configuration information, wherein the first configuration information comprises at least one of a first distance threshold or a location reference point; and
the processing unit is specifically configured to: when a distance between the first communication apparatus and the location reference point is greater than or equal to the first distance threshold, determine to send the signal on the first frequency band.

19. The apparatus according to any one of claims 15 to 18, wherein
the processing unit is further configured to obtain second configuration information, wherein the second configuration information comprises at least one of the following information: priorities of at least two frequency bands or thresholds corresponding to frequency bands with different priorities, the at least two frequency bands comprise the second frequency band, the thresholds comprise at least one of a signal threshold or a distance threshold, the signal threshold comprises the first signal threshold, and the distance threshold comprises the first distance threshold.

20. The apparatus according to claim 19, wherein the second frequency band is a frequency band with a highest priority in the at least two frequency bands.

21. The apparatus according to claim 19 or 20, wherein a signal threshold corresponding to a frequency band with a smaller frequency spacing from the first frequency band is not greater than a signal threshold corresponding to a frequency band with a larger frequency spacing from the first frequency band; and/or
a distance threshold corresponding to the frequency band with the smaller frequency spacing from the first frequency band is not less than a distance threshold corresponding to the frequency band with the larger frequency spacing from the first frequency band.

22. The apparatus according to any one of claims 19 to 21, wherein a signal threshold of a frequency band with a low priority is not less than a signal threshold of a frequency band with a high priority; and/or
a distance threshold of the frequency band with the low priority is not greater than a signal threshold of the frequency band with the high priority.

23. The apparatus according to any one of claims 15 to 22, wherein
the processing unit is specifically configured to: when receiving first indication information from a third communication apparatus, detect the signal strength of the second frequency band based on the first indication information.

24. The apparatus according to claim 23, wherein
the processing unit is further configured to: when receiving second indication information from the third communication apparatus, determine, based on the second indication information, to send the signal on the first frequency band.

25. The apparatus according to any one of claims 15 to 24, wherein
the processing unit is further configured to: detect a signal strength of a third frequency band; and when the signal strength of the third frequency band is greater than or equal to a second signal threshold, initiate a cell handover or cell reselection, or exit a radio resource control RRC connected state.

26. The apparatus according to any one of claims 15 to 25, wherein the first frequency band comprises n256; and
the second frequency band comprises any one or more of the following: n2, n25, n33, n39, and n70.

27. A third communication apparatus, wherein the apparatus comprises:
a processing unit, configured to obtain a first signal threshold; and
a transceiver unit, configured to send second configuration information, wherein the second configuration information comprises information about the first signal threshold.

28. The apparatus according to claim 27, wherein the second configuration information comprises at least one of the following information: priorities of at least two frequency bands or thresholds corresponding to frequency bands with different priorities, the at least two frequency bands comprise a second frequency band, the thresholds comprise at least one of a signal threshold or a distance threshold, the signal threshold comprises the first signal threshold, and the distance threshold comprises a first distance threshold.

29. A communication apparatus, comprising a processor and a memory, wherein
the memory is configured to store instructions; and
the processor is configured to execute the instructions, to perform the method according to any one of claims 1 to 14.

30. The communication apparatus according to claim 29, wherein the communication apparatus is a chip.

31. A communication apparatus, comprising a logic circuit and an interface, wherein the logic circuit is coupled to the interface; and
the interface is configured to input to-be-processed data, the logic circuit processes the to-be-processed data according to the method according to any one of claims 1 to 14, to obtain processed data, and the interface is configured to output the processed data.

32. A computer-readable storage medium, wherein the computer-readable storage medium is configured to store a computer program, and when the computer program is executed, the method according to any one of claims 1 to 14 is performed.

33. A computer program, wherein when the computer program is executed, the method according to any one of claims 1 to 14 is performed.

34. A communication system, comprising a first communication apparatus and a third communication apparatus, wherein the first communication apparatus is configured to perform the method according to any one of claims 1 to 12, and the third communication apparatus is configured to perform the method according to claim 13 or 14.
